# EUROPEAN PATENT SPECIFICATION

(11) **EP 3 244 562 B1**
(45) Date of publication and mention of the grant of the patent: **02.09.2020**
(21) Application number: 15879453.7
(22) Date of filing: 30.01.2015
(51) Int. Cl.: H04L 1/16, H04L 1/18

(54) **USER EQUIPMENT AND TRANSMISSION METHOD FOR ACKNOWLEDGEMENT INFORMATION**
BENUTZERGERÄT UND VERFAHREN ZUR ÜBERTRAGUNG VON BESTÄTIGUNGSINFORMATIONEN
ÉQUIPEMENT UTILISATEUR ET PROCÉDÉ DE TRANSMISSION POUR DES INFORMATIONS D'ACCUSÉ DE RÉCEPTION

(43) Date of publication of application: 15.11.2017
(73) Proprietor: Huawei Technologies Co., Ltd., Longgang District Shenzhen, Guangdong 518129 (CN)
(72) Inventor: WEN, Ronghui, Shenzhen Guangdong 518129 (CN); LYU, Yongxia, Shenzhen Guangdong 518129 (CN)
(74) Representative: Epping - Hermann - Fischer
(86) International application number: PCT/CN2015/072020
(87) International publication number: WO 2016/119245

(56) References cited:
- WO-A1-2010/007498
- CN-A- 101 674 164
- CN-A- 102 948 173
- CN-A- 103 238 289
- US-A1- 2014 064 203

## Description

### TECHNICAL FIELD

The present invention relates to the field of wireless communications technologies, and in particular, to user equipment, a network device, and an acknowledgement information transmission method.

### BACKGROUND

To ensure reliability of communication transmission, a retransmission feedback method is introduced into a radio communications system. That is: if a communications device 1 sends information to a communications device 2, the communications device 2 determines, by decoding, checking or the like, whether the obtained information is correct, and sends a determining result to the communications device 1. If fed back information indicates that the communications device 2 cannot obtain the information sent by the communications device 1, the communications device 1 needs to retransmit information sent previously; otherwise, the communications device 1 does not need to retransmit information sent previously. If indication information fed back by the communications device 2 is an acknowledgement (ACKnowledge, ACK), it indicates that the obtained information is correct; if the fed back indication information is a negative acknowledgement (Negative ACKnowledge, NACK), it indicates that the obtained information is incorrect.

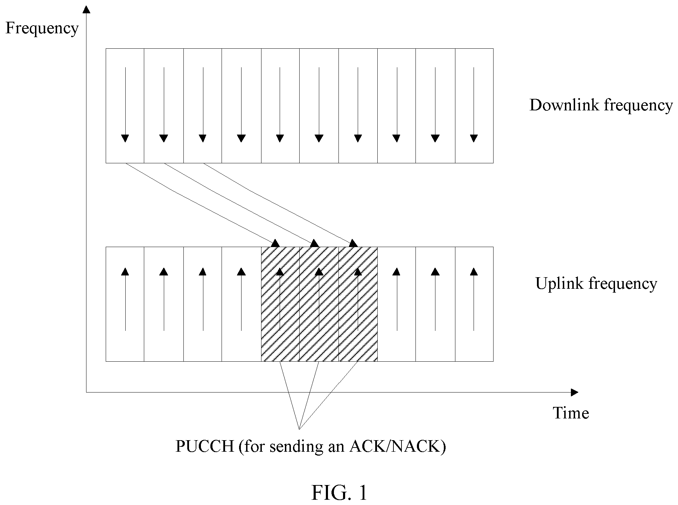

In a conventional Frequency Division Duplex (Frequency Division Duplexing, FDD) system, paired uplink/downlink frequency band resources are used, and an ACK/NACK of transmission information in a downlink frequency band resource is fed back on a corresponding uplink frequency band resource. For example: in a FDD Long Term Evolution (Long Term Evolution, LTE) system, as shown in FIG. 1, a fed back ACK/NACK is transmitted on a physical uplink control channel (Physical Uplink Control CHannel, PUCCH) in an uplink frequency band resource identified by shaded parts in FIG. 1.

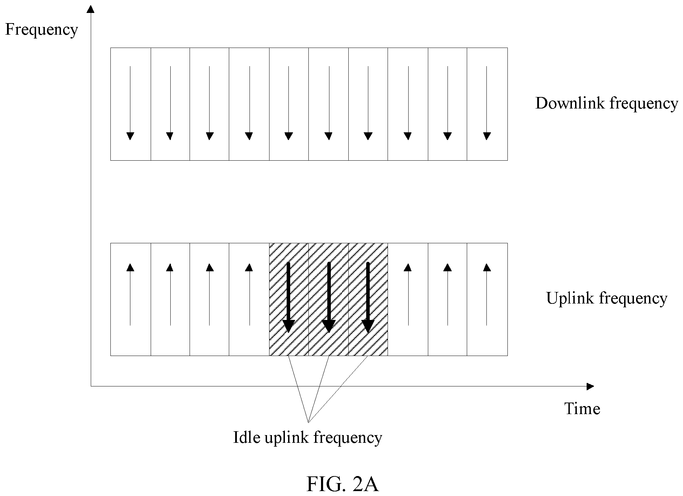

Currently, there exists a communication manner referred to as dynamic spectrum sharing (Dynamic Spectrum Sharing, DSS). In a DSS communication manner, a base station transmits a downlink signal by using an idle uplink frequency band resource, as shown in FIG. 2A.

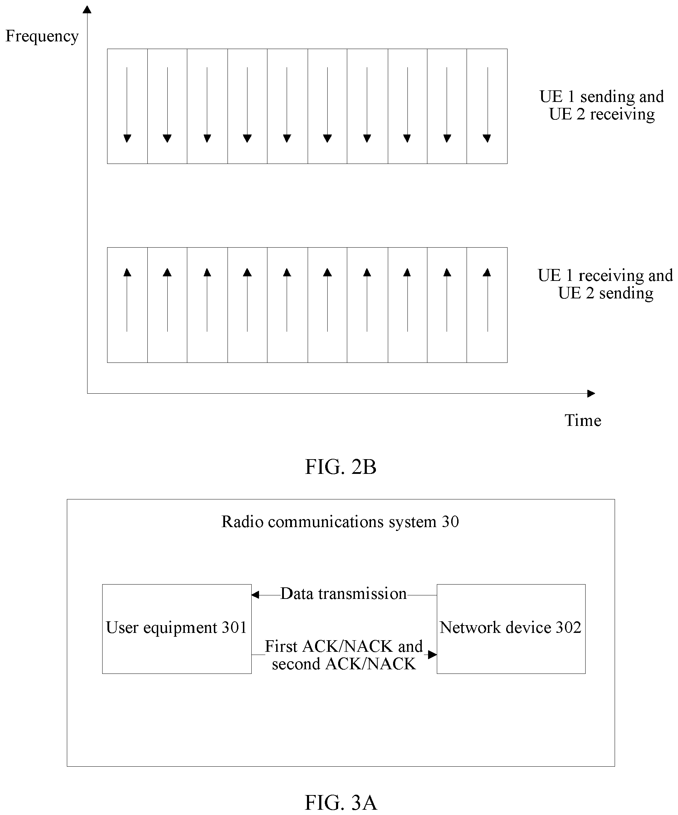

In addition, there also exists a communication manner referred to as device-to-device (Device-to-Device, D2D) communication, as shown in FIG. 2B. Usually, in a D2D communication manner, communication is directly performed between user equipments (User Equipment, UE) without being forwarding by a network device such as a base station. In this manner, a communication party sends data to another party, and the another party also needs to feed back an ACK/NACK.

When user equipment performs communication by using both a conventional communication manner shown in FIG. 1 and a communication manner such as the foregoing two manners that is different from the conventional communication manner shown in FIG. 1, currently, there exists no feedback mechanism in which the user equipment feeds back ACK/NACK information to a signal received by using the foregoing conventional communication manner and unconventional communication manners.

US 2014/0064203 A1 relates to a wireless communication system, and more specifically, to a method and a device for communicating device-to-device. The method for a first device to transmit a signal to a second device according to one embodiment of the present invention enables the first device to request to a base station a resource allocation for transmitting the signal to the second device, receive from the base station scheduling information for transmitting the signal to the second device, and the signal can be transmitted from the first device to the second device on the basis of the scheduling information, wherein the scheduling information includes information on an uplink resource for transmitting the signal from the first device to the second device. Concerning the transmission of ACK/NACK with respect to D2D communication, it further discloses that, to simultaneously transmit a plurality of ACKs/NACKs, ACK/NACK bundling, channel selection, joint encoding, etc. may be used.

### SUMMARY

Embodiments of the present invention provide user equipment, and an acknowledgement information transmission method, so as to provide a feedback mechanism in which when user equipment performs communication by using both a conventional communication manner shown in FIG. 1 and a communication manner such as the foregoing two manners shown in FIG. 2A and FIG. 2B that is different from the conventional communication manner shown in FIG. 1, the user equipment feeds back ACK/NACK information to a signal received by using the foregoing conventional communication manner and unconventional communication manners.

According to a first aspect, an embodiment of the present invention provides user equipment as defined in claim 1.

According to a second aspect, an embodiment of the present invention provides an acknowledgement information sending method according to claim 9. The invention is defined and limited by the scope of appended claims. In the following description, any embodiments referred to and not falling within the scope of the appended claims, are merely examples useful to the understanding of the invention.

Therefore, a feedback mechanism of an acknowledgement information ACK/NACK if user equipment performs communication by using both a conventional communication manner and an unconventional communication manner is provided.

### BRIEF DESCRIPTION OF DRAWINGS

FIG. 1 is a schematic diagram of an ACK/NACK sending manner in a conventional FDD system;
FIG. 2A is a schematic diagram of a data transmission manner in a radio communications system using a DSS communication manner;
FIG. 2B is a schematic diagram of a data transmission manner between user equipments in a radio communications system using a D2D communication manner;
FIG. 3A and FIG. 3B are schematic structural diagrams of a radio communications system according to an embodiment of the present invention;
FIG. 4 is a schematic structural diagram of another radio communications system according to an embodiment of the present invention;
FIG. 5 is a structural diagram of a radio frame of TDD configuration 2;
FIG. 6 is a schematic structural diagram of first user equipment according to an embodiment of the present invention;
FIG. 7 is a schematic structural diagram of second user equipment according to an embodiment of the present invention;
FIG. 8 is a schematic structural diagram of third user equipment according to an embodiment of the present invention;
FIG. 9 is a schematic structural diagram of fourth user equipment according to an embodiment of the present invention;
FIG. 10 is a schematic structural diagram of a network device according to an embodiment of the present invention;
FIG. 11 is a schematic structural diagram of a second network device according to an embodiment of the present invention;
FIG. 12 is a schematic structural diagram of a third network device according to an embodiment of the present invention;
FIG. 13 is a schematic structural diagram of a fourth network device according to an embodiment of the present invention;
FIG. 14 is a flowchart of a first acknowledgement information sending method according to an embodiment of the present invention;
FIG. 15 is a flowchart of a second acknowledgement information sending method according to an embodiment of the present invention;
FIG. 16 is a flowchart of a third acknowledgement information receiving method according to an embodiment of the present invention; and
FIG. 17 is a flowchart of a fourth acknowledgement information receiving method according to an embodiment of the present invention.

### DESCRIPTION OF EMBODIMENTS

In the two unconventional communication manners shown in FIG. 2A and FIG. 2B, user equipment also needs to feed back a receiving status of a received signal. When the user equipment receives the signal in both a conventional communication manner and the communication manner shown in FIG. 2A and/or FIG. 2B, there is no solution for feeding back a receiving status.

Therefore, embodiments of the present invention provide user equipment, a network device, and an acknowledgement information transmission method. The user equipment sorts, according to the following manner, at least two acknowledgement information ACKs/NACKs to be sent in one uplink subframe. The at least two ACKs/NACKs include at least one first ACK/NACK and at least one second ACK/NACK, and sends the sorted at least two ACKs/NACKs:
The at least one first ACK/NACK is first, and the at least one second ACK/NACK is second, or the at least one second ACK/NACK is first, and the at least one first ACK/NACK is second.

The first ACK/NACK is used to feed back a receiving status of a first signal, and the first signal is transmitted on a first frequency band; the second ACK/NACK is used to feed back a receiving status of a second signal, and the second signal is transmitted on a second frequency band; the first frequency band is a frequency band used for D2D transmission and/or a frequency band used for both uplink transmission and downlink transmission; and the second frequency band is a frequency band used for downlink transmission.

When sending at least two ACKs/NACKs, user equipment sends the sorted at least two ACKs/NACKs, so that when a network device such as a base station receives the at least two ACKs/NACKs sent by the user equipment, it may be determined, according to a same sorting sequence used by the user equipment for sending, which ACK/NACK is used to feed back a signal transmitted in an unconventional communication manner, and which ACK/NACK is used to feed back a signal transmitted in a conventional communication manner. Therefore, a feedback mechanism of an acknowledgement information ACK/NACK if user equipment performs communication by using both a conventional communication manner and an unconventional communication manner is provided.

In addition, the embodiments of the present invention provide another user equipment, network device, and acknowledgement information transmission method, and provide a solution used when a quantity of bits (bits) of an ACK/NACK to be sent in one uplink subframe exceeds a preset bit quantity threshold during carrier aggregation (Carrier Aggregation, CA). In this solution, when the quantity of bits (bits) of the ACK/NACK to be sent in one uplink subframe is relatively large and exceeds the preset bit quantity threshold, the user equipment performs bundling on the to-be-sent ACK/NACK according to the following manner and according to a sequence number of a carrier in which a signal corresponding to each to-be-sent ACK/NACK of the at least two ACKs/NACKs, and sends the bundled to-be-sent ACK/NACK:
first performing bundling on a carrier with a small sequence number, and then performing bundling on a carrier with a large sequence number, or
first performing bundling on a carrier with a large sequence number, and then performing bundling on a carrier with a small sequence number.

By means of bundling, a quantity of bits occupied by the ACK/NACK is reduced. Moreover, because a sequence number of a carrier is determined according to quality of a signal on the carrier, usually a smaller sequence number of a carrier indicates better communication quality on the carrier. If bundling is to be first performed on a carrier with a small sequence number, bundling is first performed on an ACK/NACK used to feed back a signal on a carrier with relatively good communication quality. This type of carrier has good communication quality and a stable channel status; therefore, a probability of feeding back an ACK is relatively large. A probability that multiple signals on the carrier are all retransmitted is relatively small due to the bundling, and transmission efficiency is relatively high.

If bundling is to be first performed on a carrier with a large sequence number, bundling is first performed on an ACK/NACK used to feed back a signal on a carrier with relatively poor communication quality. This type of carrier has poor communication quality; therefore, a probability of feeding back an NACK is relatively large. A probability that multiple signals on the carrier are all retransmitted may become large due to the bundling, and transmission efficiency may be reduced, but transmission reliability of a signal on this type of carrier is ensured, and transmission of multiple ACKs/NACKs can be ensured.

The following describes the embodiments of the present invention in detail with reference to the accompanying drawings.

First, two radio communications systems provided in the embodiments of the present invention are described, and then two user equipments, two network devices, and two ACK/NACK transmission methods provided in the embodiments of the present invention are described separately.

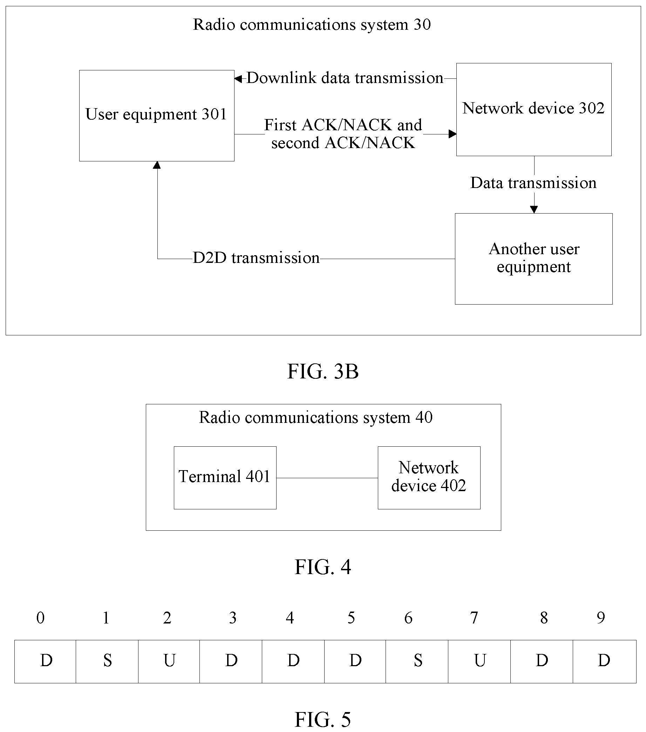

FIG. 3A and FIG. 3B are two schematic structural diagrams of a radio communications system 30 according to an embodiment of the present invention. The radio communications system 30 includes:
user equipment 301, configured to sort, according to the following sequence, at least two ACKs/NACKs to be sent in one uplink subframe, and send the sorted at least two ACKs/NACKs to a network device 302:
the at least one first ACK/NACK being first, and the at least one second ACK/NACK being second, or the at least one second ACK/NACK being first, and the at least one first ACK/NACK being second; and
the network device 302, configured to receive the sorted at least two acknowledgement information ACKs/NACKs from the uplink subframe sent by the user equipment 301; and obtain at least one first ACK/NACK and at least one second ACK/NACK from the at least two ACKs/NACKs according to a same sorting manner of the user equipment 301.

The at least two ACKs/NACKs include at least one first ACK/NACK and at least one second ACK/NACK; and the first ACK/NACK is used to feed back a receiving status of a first signal, where the first signal is transmitted on a first frequency band.

The second ACK/NACK is used to feed back a receiving status of a second signal, where the second signal is transmitted on a second frequency band; the first frequency band is a frequency band used for D2D transmission, and/or a frequency band used for both uplink transmission and downlink transmission; and the second frequency band is a frequency band used for downlink transmission.

The first frequency band includes one segment of consecutive spectrum resources or multiple segments of discrete spectrum resources; and/or
the second frequency band includes one segment of consecutive spectrum resources or multiple segments of discrete spectrum resources; where
the latter case is a scenario corresponding to carrier aggregation.

In FIG. 3A, the user equipment 301 receives the first signal sent on the first frequency band by the network device 302, and receives the second signal sent on the first frequency band by the network device 302, and the user equipment 301 feeds back the first ACK/NACK and the second ACK/NACK to the network device.

In FIG. 3B, the user equipment 301 receives the first signal that is sent on the first frequency band by the network device 302 by using another user equipment. When the user equipment 301 receives the first signal, the user equipment 301 uses a D2D communication manner used by the another user equipment. Moreover, the user equipment 301 receives the second signal sent on the second frequency band by the network device 302. The user equipment 301 feeds back the first ACK/NACK and the second ACK/NACK to the network device 302.

In FIG. 3B, the another user equipment may be located in the network device 302, or may communicate with the network device 302 according to a wireless communication manner. Communication standards of the radio communications system 30 provided in this embodiment of the present invention may include but not limited to the following communication standards:
Global System for Mobile communications (Global System of Mobile communication, GSM), Time Division-Synchronous Code Division Multiple Access (Time Division-Synchronous Code Division Multiple Access, TD-SCDMA), Wideband Code Division Multiple Access (Wideband Code Division Multiple Access, WCDMA), Time Division Duplex-Long Term Evolution (Time Division Duplexing-Long Term Evolution, TDD LTE), Frequency Division Duplex-Long Term Evolution (Frequency Division Duplexing-Long Term Evolution, FDD LTE), Long Term Evolution-Advanced, LTE-advanced (Long Term Evolution-Advanced, LTE-advanced), and the like.

The user equipment 301 may include but not limited to user equipment of the following types: a mobile phone, a tablet computer, a personal digital assistant (Personal Digital Assistant, PDA), a Point of Sales (Point of Sales, POS), an in-vehicle computer, and the like.

If a communication standard of the radio communications system 30 is GSM, the user equipment 301 is a mobile station (Mobile Station, MS), and the network device 302 is a base transceiver station (Base Transceiver Station, BTS), or a base station controller (Base Station Controller, BSC).

If a communication standard of the radio communications system 30 is TD-SCDMA or WCDMA, the user equipment 301 is UE, and the network device 302 is a node B (Node B, NB) or a radio network controller (Radio Network Controller, RNC).

If a communication standard of the radio communications system is TDD LTE or FDD LTE, the user equipment 301 is UE, and the network device 302 is an evolved node B (evolved Node B, eNB).

The acknowledgement information ACK/NACK transmitted between the user equipment 301 and the network device 302 is used to feed back a signal received by the user equipment.

For a DSS scenario and a conventional FDD scenario, the user equipment 301 feeds back, by sending an ACK/NACK, a receiving status of downlink data sent to the user equipment by the network device 302. The user equipment 301 feeds back an ACK when receiving is correct; and feeds back an NACK when receiving is incorrect.

For a D2D scenario, the user equipment 301 feeds back, by sending an ACK/NACK, a receiving status of data sent by another user equipment. Likewise, the user equipment 301 feeds back an ACK when receiving is correct; and feeds back an NACK when receiving is incorrect.

A sequence used by the user equipment 301 to send an ACK/NACK to the network device 302 may be determined according to a communication standard followed by both the user equipment 301 and the network device 302, or may be determined by transferring signaling before the user equipment 301 and the network device 302 transmit data. The network device 302 may separately obtain the first ACK/NACK and the second ACK/NACK from the received at least two ACKs/NACKs according to the same sequence used by the user equipment 301 to send the ACK/NACK.

The sent at least two ACKs/NACKs are sorted with the first ACK/NACK and the second ACK/NACK being distinguished, so that sorting of the user equipment and the network device is consistent, and understanding of downlink data transmission when an ACK/NACK is fed back to ACK/NACK information is consistent, avoiding a problem of inconsistent understanding. In a current time sequence relationship fed back by an ACK/NACK, it is only stipulated how to feed back a downlink signal sent on a second frequency band, that is, a frequency band used for downlink transmission, and it is not applicable to a scenario in this embodiment of the present invention in which both a first frequency band and a second frequency band exist, and signals transmitted on both the two frequency bands need to be fed back. Moreover, in the current time sequence relationship, the at least two ACKs/NACKs to be sent in one uplink subframe are not distinguished or sorted.

Therefore, the first ACK/NACK and the second ACK/NACK provided in this embodiment of the present invention are distinguished and sorted, so that the stipulation of the existing time sequence relationship fed back by an ACK/NACK is broken, and a problem of inconsistent understanding of two communication parties for at least two ACKs/NACKs is avoided.

In addition to the foregoing manner used to determine a sequence between the first ACK/NACK and the second ACK/NACK, at least two first ACKs/NACKs may also be sorted, and at least two second ACKs/NACKs may also be sorted.

Specifically, the at least two first ACKs/NACKs may be sorted according to a sequence or reverse sequence of a sequence number of a carrier in which a first downlink signal corresponding to the first ACK/NACK is located; and
the at least two second ACKs/NACKs are sorted according to a sequence or reverse sequence of a sequence number of a carrier in which a second downlink signal corresponding to the second ACK/NACK is located.

If a quantity of bits (bits) of to-be-sent at least two ACKs/NACKs is greater than a preset bit quantity threshold, optionally, the user equipment 301 may bundle the to-be-sent at least two ACKs/NACKs before sorting or after sorting, and then send the sorted and bundled at least two ACKs/NACKs to the network device 302.

The bundling refers to bundling several ACKs/NACKs when the user equipment has at least two ACKs/NACKs to be sent in one uplink subframe, to reduce uplink transmission resources, or due to a limitation on an uplink transmission capability.

For example: an ACK/NACK 1 and an ACK/NACK 2 are bundled; if a value of the ACK/NACK 1 is ACK, and a value of the ACK/NACK is NACK, or if a value of the ACK/NACK 1 is NACK, and a value of the ACK/NACK is ACK, a value of the bundled ACK/NACK is NACK. Only when the values of both the ACK/NACK 1 and the ACK/NACK 2 are ACK, the bundled ACK/NACK is ACK.

Alternatively, for a DSS scenario and a conventional FDD scenario, considering that when the user equipment 301 does not receive downlink scheduling control information sent on a downlink control channel by the network device 302, the user equipment 301 does not feed back an acknowledgement information ACK/NACK in the uplink subframe. This case is referred to as discontinuous transmission (Discontinuous Transmission, DTX). When performing bundling, the user equipment 301 may use multiple optional implementation manners including the following manners:
The user equipment 301 regards the DTX case as NACK. In this case, the user equipment 301 may regard that the downlink scheduling control information sent by the network device 302 should have been received. However, the downlink scheduling control information has not been correctly received, and the user equipment 301 uses the fed back acknowledgement information ACK/NACK as NACK to be bundled with other ACKs/NACKs. Correspondingly, the network device knows a rule for the user equipment to perform bundling; therefore, when the network device receives at least two ACKs/NACKs, the network device knows which ACK/NACK is a bundled ACK/NACK. When a value of a received bundled ACK/NACK is ACK, the network device determines that a value of each ACK/NAC, before bundling, corresponding to the bundled ACK/NACK is ACK; or when a value of a received bundled ACK/NACK is NACK, the network device determines that a value of each ACK/NACK, before bundling, corresponding to the bundled ACK/NACK is NACK.

For a D2D scenario, other user equipments may also send data to the user equipment 301 by using a DTX manner. Likewise, bundling may also be performed by using a manner similar to that used by the foregoing conventional FDD system and DSS system. Details are not described herein again.

There are multiple bundling manners, for example: time bundling (Time bundling) and spatial bundling (Spatial bundling). Time bundling refers to that for data received at different moments, user equipment performs feedback on a same uplink subframe, and performs bundling on an ACK/NACK separately fed back by the data received at different moments. For example: for FDD LTE, the user equipment performs bundling on an ACK/NACK separately fed back by downlink data received on different subframes.

Spatial bundling refers to that when a MIMO technology is used, for different received MIMO streams, user equipment performs feedback on a same uplink subframe, and performs bundling on an ACK/NACK separately fed back by data received on the different MIMO streams. For example: for FDD LTE, the user equipment performs bundling on an ACK/NACK separately fed back by downlink data received by different MIMO streams, that is, performs bundling on an ACK/NACK separately fed back by data received on a same resource and different codewords. The network device 302 determines feedback information for each received signal according to the received bundled at least two ACKs/NACKs, and according to a rule predetermined with the user equipment 301 or according to a rule stipulated in a protocol followed by both the network device 302 and the user equipment 301.

The preset bit quantity threshold may be set according to an uplink transmission capability of the user equipment 301, a quantity of bits that may be used to transmit an ACK/NACK and that are in an uplink subframe for transmitting the at least two ACKs/NACKs, and/or a transmission format of an ACK/NACK, or may be set according to a standard stipulation. The preset bit quantity threshold may be sent, by using a message, to the user equipment 301 after being configured by the network device 302.

According to a current time sequence for data transmission and feedback information transmission between the network device and the user equipment, when sending downlink data to the user equipment, the network device also sends control information to the user equipment, to instruct the user equipment to receive the downlink data. Moreover, the network device sends control information to the user equipment, or pre-determines a rule according to a standard, and indicates to the user equipment when to feed back an ACK/NACK.

Similarly, for a D2D communication manner, a data sender also sends control information to a data receiver, to instruct the data receiver to receive data. Moreover, the data sender may also send control information to the data receiver, or pre-determines a rule according to a standard, and indicate to the receiver when to feed back an ACK/NACK.

Therefore, the network device 302 knows that the user equipment 301 receives particular data at a particular moment, and the received particular data needs to be fed back at another particular moment. Therefore, the network device 302 can know a quantity of bits of at least two ACKs/NACKs to be received from one uplink subframe, and when the quantity of bits is greater than the preset bit quantity threshold, interpret the received bundled at least two ACKs/NACKs by using a same rule used by the user equipment 301 for bundling.

Particularly, for a structure of a radio communications system shown in FIG. 3B, the network device 302 knows when another user equipment sends data to the user equipment 301, and also knows when the user equipment 301 feeds back the received data. For example: the network device 302 controls the another user equipment to send data to the user equipment 302 and feed back acknowledgement information. Therefore, for a D2D scenario, the network device 302 also knows a quantity of bits of at least two ACKs/NACKs to be sent in one uplink subframe by the user equipment.

For example: the network device 302 receives a M bits of ACKs/NACKs, determines that front X bits are a bundled ACK/NACK, and according to a bundling rule known in advance, knows that a bit of each bundled ACK/NACK is used to feed back which data of a subframe or a codeword. If an ACK/NACK of one bit is ACK, it is determined that data of multiple subframes or codewords that the bit is used to feed back is correctly received by the user equipment 301; or if an ACK/NACK of one bit is NACK, it is determined that multiple subframes or codewords represented by the bit are not correctly received by the user equipment 301, and need to be sent to the user equipment 301 again.

During bundling, the user equipment 301 may perform bundling by using one of multiple manners including the following optional manners:
manner 1: perform spatial bundling, so that a quantity of bits of the bundled at least two ACKs/NACKs is not greater than the preset bit quantity threshold; or
manner 2: perform time bundling, so that a quantity of bits of the bundled at least two ACKs/NACKs is not greater than the preset bit quantity threshold;
manner 3: first perform spatial bundling, and if a quantity of bits of the at least two ACKs/NACKs on which spatial bundling is performed is greater than the preset bit quantity threshold, then perform time bundling, so that a quantity of bits of the bundled at least two ACKs/NACKs is not greater than the preset bit quantity threshold; and
manner 4: first perform time bundling, and if a quantity of bits of the at least two ACKs/NACKs on which time bundling is performed is greater than the preset bit quantity threshold, then perform spatial bundling, so that a quantity of bits of the bundled at least two ACKs/NACKs is not greater than the preset bit quantity threshold.

In the foregoing manner 3, for spatial bundling, because spatial bundling is bundling between different codewords sent on a same time resource and frequency resource, and because interference on the same time resource and frequency resource is relatively consistent, a probability whether correct receiving of two codewords is consistent is relatively large. In other words, the two codewords are incorrectly received, and an NACK is fed back; or the two codewords are correctly received, and an ACK is fed back. In this way, bundling is performed on information of ACKs/NACKs of the two codewords, and a probability that correctly received data is retransmitted is not large due to the bundling.

For time bundling, because time bundling is bundling of information of ACKs/NACKs corresponding to two transport blocks on different time resources, and because a probability that interference on the different time resources is different is usually greater than a probability that interference on a same time-frequency resource is different, spatial bundling is performed first, and time bundling is performed then. Compared with a manner of first performing time bundling and then performing spatial bundling, a probability that correctly received data is retransmitted is smaller due to the bundling, downlink transmission efficiency is higher, and a downlink performance loss is smaller.

Optionally, the user equipment 301 performs the spatial bundling and time bundling according to the following manner and according to a sequence number of a carrier in which a signal corresponding to each ACK/NACK of the at least two ACKs/NACKs to be sent on the uplink subframe is located:
first performing spatial bundling and/or time bundling on a carrier with a small sequence number, and then performing spatial bundling and/or time bundling on a carrier with a large sequence number; or
first performing spatial bundling and/or time bundling on a carrier with a large sequence number, and then performing spatial bundling and/or time bundling on a carrier with a small sequence number.

By means of bundling, a quantity of bits occupied by the ACK/NACK is reduced.

Because a sequence number of a carrier is determined according to quality of a signal on the carrier, usually a smaller sequence number of a carrier indicates better communication quality on the carrier. If bundling is to be performed on at least two ACKs/NACKs according to a manner of a sequence of sequence numbers of carriers, bundling is first performed on an ACK/NACK used to feed back a signal on a carrier with relatively good communication quality. This type of carrier has good communication quality and a stable channel status; therefore, a probability of feeding back an ACK is relatively large. A probability that multiple signals on the carrier are all retransmitted is relatively small due to the bundling, and transmission efficiency is relatively high.

If bundling is to be performed on at least two ACKs/NACKs according to a manner of a reverse sequence of sequence numbers of carriers, bundling is first performed on an ACK/NACK used to feed back a signal on a carrier with relatively poor communication quality. This type of carrier has poor communication quality; therefore, a probability of feeding back an NACK is relatively large. A probability that multiple signals on the carrier are all retransmitted may become large due to the bundling, and transmission efficiency may be reduced, but transmission reliability of a signal on this type of carrier is ensured, and transmission of the at least two ACKs/NACKs can be also ensured.

During bundling, optionally, the user equipment 301 may first perform spatial bundling and time bundling on a second ACK/NACK, and then perform spatial bundling and time bundling on a first ACK/NACK.

This is because the first ACK/NACK is used to feed back a receiving status of a signal transmitted on a first frequency band, the first frequency band is a frequency band used for D2D transmission and/or used for both uplink transmission and downlink transmission, and interference affected by each signal transmitted on the first frequency band is inconsistent. Therefore, first ACKs/NACKs fed back by the user equipment 301 to different signals transmitted on the first frequency band are inconsistent.

The second ACK/NACK is fed back to a receiving status of a downlink signal transmitted on a second frequency band, the second frequency band is a frequency band used for downlink transmission, and interference affected by each downlink signal transmitted on the second frequency band is basically consistent. Compared with the first ACK/NACK, a probability that second ACKs/NACKs fed back by the user equipment 301 to different downlink signals transmitted on the second frequency band are consistent is relatively large.

Therefore, bundling is first performed on the second ACK/NACK, and then bundling is performed on the first ACK/NACK.

The user equipment 301 may send at least two ACKs/NACKs to the network device 302 by using an existing sending format or by defining a new sending format.

Using an example in which a communication standard of the radio communications system 30 is FDD LTE, when sending the at least two ACKs/NACKs, the user equipment 301 may perform transmission by using a physical uplink control channel (Physical Uplink Control CHannel, PUCCH) format 3 (Format 3), or may perform transmission by using a PUCCH format 1b with channel selection (PUCCH Format 1b with channel selection).

For an example of performing transmission by using a physical uplink control channel PUCCH Format 3, refer to the following Embodiment 1, and for an example of performing transmission by using a PUCCH Format 1b with channel selection, refer to the following Embodiment 2. Optionally, a PUCCH resource occupied by the first ACK/NACK is determined by using a sequence number of a control channel element (Channel Control Element, CCE) CCE of a PDCCH or high-layer signaling.

Specifically, when a first downlink subframe prior to the uplink subframe has a PDCCH resource, a PUCCH resource occupied by the first ACK/NACK is determined by using a sequence number of a CCE of a PDCCH, or
when a first downlink subframe prior to the uplink subframe has no PDCCH resource, a PUCCH resource occupied by the first ACK/NACK is determined by using high-layer signaling, where
the first downlink subframe is a subframe sending a data scheduling instruction, and the data scheduling instruction is used to schedule data fed back by the first ACK/NACK.

The foregoing describes the radio communications system 30 provided in the embodiments of the present invention, the following describes another radio communications system 40 provided in the embodiments of the present invention.

FIG. 4 is a schematic structural diagram of another radio communications system 40 according to an embodiment of the present invention. As shown in FIG. 4, thee radio communications system 40 includes:
user equipment 401, configured to determine, during carrier aggregation, a quantity of bits of at least two ACKs/NACKs to be sent in one uplink subframe; and if the quantity of bits of the to-be-sent at least two ACKs/NACKs is greater than a preset bit quantity threshold, bundle the to-be-sent at least two ACKs/NACKs according to the following manner and according to a sequence number of a carrier in which a signal corresponding to each ACK/NACK of the to-be-sent at least two ACKs/NACKs is located, and send the bundled at least two ACKs/NACKs to a network device 402:
first performing bundling on a carrier with a small sequence number, and then performing bundling on a carrier with a large sequence number, or
first performing bundling on a carrier with a large sequence number, and then performing bundling on a carrier with a small sequence number;
the network device 402, configured to determine, during CA, a quantity of bits of an ACK/NACK to be received from one uplink subframe sent by the user equipment 401, and receive the at least two ACKs/NACKs from the uplink subframe.
if the determined quantity of bits of the ACK/NACK to be received from the uplink subframe is greater than the preset bit quantity threshold, determine that the at least two ACKs/NACKs received from the uplink subframe are generated by the user equipment 401 by bundling, according to the following manner and according to a sequence number of a carrier in which a signal corresponding to each ACK/NACK of ACKs/NACKs to be sent on the uplink subframe is located, the ACKs/NACKs to be sent on the uplink subframe:
   first performing bundling on a carrier with a small sequence number, and then performing bundling on a carrier with a large sequence number, or
   first performing bundling on a carrier with a large sequence number, and then performing bundling on a carrier with a small sequence number; and
   according to the foregoing manner used by the user equipment 401 for bundling, obtain each ACK/NACK before bundling from the received at least two ACKs/NACKs.

The following two operations executed by the network device 402 are not in a particular sequence:
a quantity of bits of an ACK/NACK to be received from one uplink subframe sent by the user equipment 401; and
receiving at least two ACKs/NACKs from the uplink subframe.

The radio communications system 40 is used, in a carrier aggregation scenario, when the quantity of bits of the ACK/NACK to be sent in one uplink subframe exceeds the preset bit quantity threshold, sending of the ACK/NACK is implemented by means of bundling. By means of bundling, a quantity of bits occupied by the ACK/NACK is reduced. Moreover, because a sequence number of a carrier is determined according to quality of a signal on the carrier, usually a smaller sequence number of a carrier indicates better communication quality on the carrier. If bundling is to be first performed on a carrier with a small sequence number, bundling is first performed on an ACK/NACK used to feed back a signal on a carrier with relatively good communication quality. This type of carrier has good communication quality and a stable channel status; therefore, a probability of feeding back an ACK is relatively large. A probability that multiple signals on the carrier are all retransmitted is relatively small due to the bundling, and transmission efficiency is relatively high.

If bundling is to be first performed on a carrier with a large sequence number, bundling is first performed on an ACK/NACK used to feed back a signal on a carrier with relatively poor communication quality. This type of carrier has poor communication quality; therefore, a probability of feeding back an NACK is relatively large. A probability that multiple signals on the carrier are all retransmitted may become large due to the bundling, and transmission efficiency may be reduced, but transmission reliability of a signal on this type of carrier is ensured, and transmission of multiple ACKs/NACKs can be ensured.

For a standard of the radio communications system 40, for various user equipment forms of the user equipment 401, and specific implementation forms of the network device 402 in different communication standards, refer to the radio communications system 30. Details are not described herein again.

In the radio communications system 40, the user equipment 401 may communicate with the network device 402 by using the conventional FDD communication manner shown in FIG. 1; or may communicate with the network device 402 by using the DSS communication manner shown in FIG. 2A, where for a system structure thereof, refer to FIG. 3A; or may communicate with the network device 402 by using the D2D communication manner shown in FIG. 2B, where for a system result thereof, refer to FIG. 3B.

Optionally, the user equipment 401 may bundle the to-be-sent at least two ACKs/NACKs by using one of the following multiple manners:
manner 1: perform spatial bundling on the to-be-sent at least two ACKs/NACKs, so that a quantity of bits of the bundled at least two ACKs/NACKs is not greater than the preset bit quantity threshold;
manner 2: perform time bundling on the to-be-sent at least two ACKs/NACKs, so that a quantity of bits of the bundled at least two ACKs/NACKs is not greater than the preset bit quantity threshold;
manner 3: first perform spatial bundling on the to-be-sent at least two ACKs/NACKs, and if a quantity of bits of the at least two ACKs/NACKs on which spatial bundling is performed is greater than the preset bit quantity threshold, then perform time bundling, so that a quantity of bits of the bundled at least two ACKs/NACKs is not greater than the preset bit quantity threshold;
manner 4: first perform time bundling on the to-be-sent at least two ACKs/NACKs, and if a quantity of bits of the at least two ACKs/NACKs on which time bundling is performed is greater than the preset bit quantity threshold, then perform spatial bundling, so that a quantity of bits of the bundled at least two ACKs/NACKs is not greater than the preset bit quantity threshold.

For a principle of bundling by the user equipment 401, a principle used by the network device 402 to parse a received bundled ACK/NACK, and principles of spatial bundling and time bundling, refer to the user equipment 301 and the network device 302 in the radio communications system 30. Details are not described herein again.

Optionally, the user equipment 401 may send the bundled at least two ACKs/NACKs by using a PUCCH Format 3 or a PUCCH Format 1b with channel selection.

Optionally, if the bundled at least two ACKs/NACKs is sent by using a PUCCH Format 1b with channel selection, the preset bit quantity threshold is 4; and
the bundled at least two ACKs/NACKs occupy 4 bits, where 2 bits are used to feed back a receiving status of a first signal sent on one carrier on a first frequency band, and the other 2 bits are used to feed back a receiving status of a second signal sent on one carrier on a second frequency band; or
the bundled at least two ACKs/NACKs occupy 4 bits, where 2 bits are separately used to feed back a receiving status of a first signal sent on two carriers on a first frequency band, and the other 2 bits are used to feed back a receiving status of a second signal sent on two carriers on a second frequency band; or
the bundled at least two ACKs/NACKs occupy 4 bits, where 1 bit is used to feed back a receiving status of a first signal sent on one carrier on a first frequency band, and the other 3 bits are separately used to feed back a receiving status of a second signal sent on three carriers on a second frequency band, where
the first frequency band is a frequency band used for D2D transmission and/or a frequency band used for both uplink transmission and downlink transmission; and the second frequency band is a frequency band used for downlink transmission.

Based on the same invention idea, the embodiments of the present invention further provide two user equipments, network devices, and acknowledgement information transmission methods. Because principles thereof for resolving technical problems are similar to those of the radio communications systems provided in the embodiments of the present invention, for implementation thereof, refer to the foregoing implementation of the radio communications systems. Repeated parts are not described again.

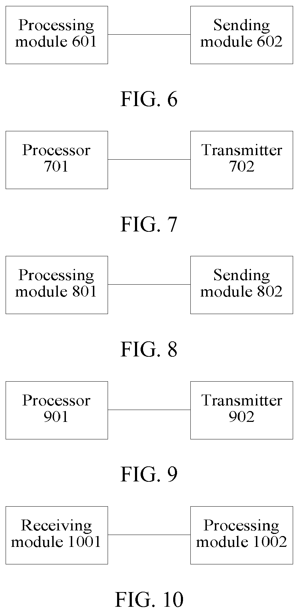

FIG. 6 is a schematic structural diagram of first user equipment according to an embodiment of the present invention. As shown in FIG. 6, the user equipment includes:
a processing module 601, configured to sort, according to the following sequence, at least two acknowledgement information ACKs/NACKs to be sent in one uplink subframe by the user equipment, where the at least two ACKs/NACKs include at least one first ACK/NACK and at least one second ACK/NACK:
the at least one first ACK/NACK being first, and the at least one second ACK/NACK being second, or
the at least one second ACK/NACK being first, and the at least one first ACK/NACK being second, where
the first ACK/NACK is used to feed back a receiving status of a first signal, and the first signal is transmitted on a first frequency band; the second ACK/NACK is used to feed back a receiving status of a second signal, and the second signal is transmitted on a second frequency band; the first frequency band is a frequency band used for device-to-device D2D transmission and/or a frequency band used for both uplink transmission and downlink transmission; and the second frequency band is a frequency band used for downlink transmission; and
a sending module 602, configured to send the at least two ACKs/NACKs sorted by the processing module 601.

Optionally, the processing module 601 is specifically configured to:
sort the at least one first ACK/NACK according to a sequence or reverse sequence of a sequence number of a carrier in which the first signal corresponding to the first ACK/NACK is located; and
sort the at least one second ACK/NACK according to a sequence or reverse sequence of a sequence number of a carrier in which the second signal corresponding to the second ACK/NACK is located.

Optionally, the processing module 601 is further configured to: before the sending module 602 sends the sorted at least two ACKs/NACKs,
determine a quantity of bits bits of the at least two ACKs/NACKs to be sent by the user equipment;
determine that the determined quantity of bits is greater than a preset bit quantity threshold; and
before sorting the at least two ACKs/NACKs to be sent in one uplink subframe by the user equipment, bundle the at least one first ACK/NACK, and bundle the at least one second ACK/NACK, where
the processing module 601 is specifically configured to sort the bundled at least one first ACK/NACK and the bundled at least one second ACK/NACK.

Optionally, the processing module 601 is further configured to: before sending the sorted at least two ACKs/NACKs,
determine a quantity of bits bits of the at least two ACKs/NACKs to be sent by the user equipment, and determine that the determined quantity of bits is greater than a preset bit quantity threshold; and
after sorting at least two ACKs/NACKs to be sent in one uplink subframe by the user equipment, bundle at least one first ACK/NACK of the sorted at least two ACKs/NACKs, and bundle at least one second ACK/NACK of the sorted at least two ACKs/NACKs.

Optionally, the processing module 601 is specifically configured to:
perform spatial bundling, so that a quantity of bits of the bundled at least two ACKs/NACKs is not greater than the preset bit quantity threshold; or
perform time bundling, so that a quantity of bits of the bundled at least two ACKs/NACKs is not greater than the preset bit quantity threshold; or
first perform spatial bundling, and if a quantity of bits of the at least two ACKs/NACKs on which spatial bundling is performed is greater than the preset bit quantity threshold, then perform time bundling, so that a quantity of bits of the bundled at least two ACKs/NACKs is not greater than the preset bit quantity threshold; or
first perform time bundling, and if a quantity of bits of the at least two ACKs/NACKs on which time bundling is performed is greater than the preset bit quantity threshold, then perform spatial bundling, so that a quantity of bits of the bundled at least two ACKs/NACKs is not greater than the preset bit quantity threshold.

Optionally, the processing module 601 is specifically configured to perform bundling according to the following manner and according to a sequence number of a carrier in which a signal corresponding to each ACK/NACK of the at least two ACKs/NACKs to be sent on the uplink subframe is located:
first performing spatial bundling and/or time bundling on a carrier with a small sequence number, and then performing spatial bundling and/or time bundling on a carrier with a large sequence number; or
first performing spatial bundling and/or time bundling on a carrier with a large sequence number, and then performing spatial bundling and/or time bundling on a carrier with a small sequence number.

Optionally, the processing module 601 is specifically configured to:
first perform spatial bundling and/or time bundling on the at least one second ACK/NACK, and then perform spatial bundling and/or time bundling on the at least one first ACK/NACK; or
first perform spatial bundling and/or time bundling on the at least one first ACK/NACK, and then perform spatial bundling and/or time bundling on the at least one second ACK/NACK.

Optionally, the sending module 602 is specifically configured to:
send the sorted at least two ACKs/NACKs by using a physical uplink control channel PUCCH format 3.

Optionally, the sending module 602 is specifically configured to:
send the sorted at least two ACKs/NACKs by using a PUCCH format 1b with channel selection.

Optionally, the preset bit quantity threshold is 4; and
the bundled at least two ACKs/NACKs occupy 4 bits, where 2 bits are used to feed back a receiving status of the first signal sent on one carrier on the first frequency band, and the other 2 bits are used to feed back a receiving status of the second signal sent on one carrier on the second frequency band; or
the bundled at least two ACKs/NACKs occupy 4 bits, where 2 bits are separately used to feed back a receiving status of the first signal sent on two carriers on the first frequency band, and the other 2 bits are used to feed back a receiving status of the second signal sent on two carriers on the second frequency band; or
the bundled at least two ACKs/NACKs occupy 4 bits, where 1 bit is used to feed back a receiving status of the first signal sent on one carrier on the first frequency band, and the other 3 bits are separately used to feed back a receiving status of the second signal sent on three carriers on the second frequency band.

Optionally, a PUCCH resource occupied by the first ACK/NACK is determined by using a sequence number of a control channel element CCE of a physical downlink control channel PDCCH or high-layer signaling.

Optionally, when a first downlink subframe prior to the uplink subframe has a physical downlink control channel PDCCH resource, a PUCCH resource occupied by the first ACK/NACK is determined by using a sequence number of a control channel element CCE of a PDCCH; or
when a first downlink subframe prior to the uplink subframe has no PDCCH resource, a PUCCH resource occupied by the first ACK/NACK is determined by using high-layer signaling, where
the first downlink subframe is a subframe sending a data scheduling instruction, and the data scheduling instruction is used to schedule data fed back by the first ACK/NACK. Optionally, the first frequency band includes one segment of consecutive spectrum resources or multiple segments of discrete spectrum resources; and/or
the second frequency band includes one segment of consecutive spectrum resources or multiple segments of discrete spectrum resources.

FIG. 7 is a schematic structural diagram of second user equipment according to an embodiment of the present invention. As shown in FIG. 7, the user equipment includes:
a processor 701, configured to sort, according to the following sequence, at least two acknowledgement information ACKs/NACKs to be sent in one uplink subframe by the user equipment, where the at least two ACKs/NACKs include at least one first ACK/NACK and at least one second ACK/NACK:
the at least one first ACK/NACK being first, and the at least one second ACK/NACK being second, or
the at least one second ACK/NACK being first, and the at least one first ACK/NACK being second, where
the first ACK/NACK is used to feed back a receiving status of a first signal, and the first signal is transmitted on a first frequency band; the second ACK/NACK is used to feed back a receiving status of a second signal, and the second signal is transmitted on a second frequency band; the first frequency band is a frequency band used for device-to-device D2D transmission and/or a frequency band used for both uplink transmission and downlink transmission; and the second frequency band is a frequency band used for downlink transmission; and
a transmitter 702, configured to send the at least two ACKs/NACKs sorted by the processor 170.

For specific implementation of the processor 701, refer to the foregoing processing module 601, and for specific implementation of the transmitter 702, refer to the foregoing module 602. Repeated parts are not described again.

FIG. 8 is a schematic structural diagram of third user equipment according to an embodiment of the present invention. As shown in FIG. 8, the user equipment includes:
a processing module 801, configured to determine, during carrier aggregation CA, a quantity of bits bits of at least two acknowledgement information ACKs/NACKs to be sent in one uplink subframe by the user equipment; and
determining that the quantity of bits of the to-be-sent at least two ACKs/NACKs is greater than a preset bit quantity threshold, and bundling the to-be-sent at least two ACKs/NACKs according to the following manner and according to a sequence number of a carrier in which a signal corresponding to each ACK/NACK of the to-be-sent at least two ACKs/NACKs is located:
   first performing bundling on a carrier with a small sequence number, and then performing bundling on a carrier with a large sequence number, or
   first performing bundling on a carrier with a large sequence number, and then performing bundling on a carrier with a small sequence number; and
   a sending module 802, configured to send the at least two ACKs/NACKs bundled by the processing module 801.

Optionally, the processing module 801 is specifically configured to:
perform spatial bundling on the at least two ACKs/NACKs to be sent by the user equipment, so that a quantity of bits of the bundled at least two ACKs/NACKs is not greater than the preset bit quantity threshold; or
perform time bundling on the at least two ACKs/NACKs to be sent by the user equipment, so that a quantity of bits of the bundled at least two ACKs/NACKs is not greater than the preset bit quantity threshold; or
first perform spatial bundling on the at least two ACKs/NACKs to be sent by the user equipment, and if a quantity of bits of the at least two ACKs/NACKs on which spatial bundling is performed is greater than the preset bit quantity threshold, then perform time bundling, so that a quantity of bits of the bundled at least two ACKs/NACKs is not greater than the preset bit quantity threshold; or
first perform time bundling on the at least two ACKs/NACKs to be sent by the user equipment, and if a quantity of bits of the at least two ACKs/NACKs on which time bundling is performed is greater than the preset bit quantity threshold, then perform spatial bundling, so that a quantity of bits of the bundled at least two ACKs/NACKs is not greater than the preset bit quantity threshold.

Optionally, the sending module 802 is specifically configured to:
send the bundled at least two ACKs/NACKs by using a physical uplink control channel PUCCH format 3.

Optionally, the sending module 802 is specifically configured to:
send the bundled at least two ACKs/NACKs by using a PUCCH format 1b with channel selection.

Optionally, the preset bit quantity threshold is 4; and
the bundled at least two ACKs/NACKs occupy 4 bits, where 2 bits are used to feed back a receiving status of a first signal sent on one carrier on a first frequency band, and the other 2 bits are used to feed back a receiving status of a second signal sent on one carrier on a second frequency band; or
the bundled at least two ACKs/NACKs occupy 4 bits, where 2 bits are separately used to feed back a receiving status of a first signal sent on two carriers on a first frequency band, and the other 2 bits are used to feed back a receiving status of a second signal sent on two carriers on a second frequency band; or
the bundled at least two ACKs/NACKs occupy 4 bits, where 1 bit is used to feed back a receiving status of a first signal sent on one carrier on a first frequency band, and the other 3 bits are separately used to feed back a receiving status of a second signal sent on three carriers on a second frequency band, where
the first frequency band is a frequency band used for device-to-device D2D transmission and/or a frequency band used for both uplink transmission and downlink transmission; and the second frequency band is a frequency band used for downlink transmission.

FIG. 9 is a schematic structural diagram of fourth user equipment according to an embodiment of the present invention. As shown in FIG. 9, the user equipment includes:
a processor 901, configured to determine, during carrier aggregation CA, a quantity of bits bits of at least two acknowledgement information ACKs/NACKs to be sent in one uplink subframe by the user equipment; and
determine that the quantity of bits of the to-be-sent at least two ACKs/NACKs is greater than a preset bit quantity threshold, and bundle the to-be-sent at least two ACKs/NACKs according to the following manner and according to a sequence number of a carrier in which a signal corresponding to each ACK/NACK of the to-be-sent at least two ACKs/NACKs is located:
   first performing bundling on a carrier with a small sequence number, and then performing bundling on a carrier with a large sequence number, or
   first performing bundling on a carrier with a large sequence number, and then performing bundling on a carrier with a small sequence number; and
   a transmitter 902, configured to send the at least two ACKs/NACKs bundled by the processor 901.

For specific implementation of the processor 901, refer to the foregoing processing module 801, and for specific implementation of the transmitter 902, refer to the foregoing module 802. Repeated parts are not described again.

FIG. 10 is a schematic structural diagram of a first network device according to an embodiment of the present invention. As shown in FIG. 10, the network device includes:
a receiving module 1001, configured to receive at least two acknowledgement information ACKs/NACKs from one uplink subframe;
a processing module 1002, configured to obtain, according to the following sequence, at least one first ACK/NACK and at least one second ACK/NACK from the at least two ACKs/NACKs received by the receiving module 1001:
   the at least one first ACK/NACK being first, and the at least one second ACK/NACK being second, or
   the at least one second ACK/NACK being first, and the at least one first ACK/NACK being second; where
   the first ACK/NACK is used to feed back a receiving status of a first signal, and the first signal is transmitted on a first frequency band; the second ACK/NACK is used to feed back a receiving status of a second signal, and the second signal is transmitted on a second frequency band; the first frequency band is a frequency band used for device-to-device D2D transmission and/or a frequency band used for both uplink transmission and downlink transmission; and the second frequency band is a frequency band used for downlink transmission.

Optionally, the at least one first ACK/NACK is sorted according to a sequence or reverse sequence of a sequence number of a carrier in which the first signal corresponding to the at least one first ACK/NACK is located; and
the at least one second ACK/NACK is sorted according to a sequence or reverse sequence of a sequence number of a carrier in which the second signal corresponding to the at least one second ACK/NACK is located.

Optionally, the processing module 1002 is further configured to: before obtaining at least one first ACK/NACK and at least one second ACK/NACK from the at least two ACKs/NACKs received by the receiving module 1001,
determine a quantity of bits bits of an ACK/NACK to be received on the uplink subframe; and
determining that the determined quantity of bits is greater than a preset bit quantity threshold, and determine that the at least two ACKs/NACKs received by the receiving module 1001 includes the bundled at least one first ACK/NACK and the bundled at least one second ACK/NACK.

Optionally, the bundled at least one first ACK/NACK and the bundled at least one second ACK/NACK are bundled according to the following manner:
performing spatial bundling, so that a quantity of bits of the bundled at least two ACKs/NACKs is not greater than the preset bit quantity threshold; or
performing time bundling, so that a quantity of bits of the bundled at least two ACKs/NACKs is not greater than the preset bit quantity threshold; or
first performing spatial bundling, and if a quantity of bits of the at least two ACKs/NACKs on which spatial bundling is performed is greater than the preset bit quantity threshold, then performing time bundling, so that a quantity of bits of the bundled at least two ACKs/NACKs is not greater than the preset bit quantity threshold; or
first performing time bundling, and if a quantity of bits of the at least two ACKs/NACKs on which time bundling is performed is greater than the preset bit quantity threshold, then performing spatial bundling, so that a quantity of bits of the bundled at least two ACKs/NACKs is not greater than the preset bit quantity threshold.

Optionally, the bundled at least one first ACK/NACK and the bundled at least one second ACK/NACK are bundled, by user equipment that sends the at least two ACKs/NACKs, according to the following manner and according to a sequence number of a carrier in which a signal corresponding to each ACK/NACK to be sent on the uplink subframe is located:
first performing spatial bundling and/or time bundling on a carrier with a small sequence number, and then performing spatial bundling and/or time bundling on a carrier with a large sequence number; or
first performing spatial bundling and/or time bundling on a carrier with a large sequence number, and then performing spatial bundling and/or time bundling on a carrier with a small sequence number.

Optionally, the bundled at least one first ACK/NACK and the bundled at least one second ACK/NACK are bundled according to the following manner:
first performing spatial bundling and/or time bundling on the at least one second ACK/NACK, and then performing spatial bundling and/or time bundling on the at least one first ACK/NACK; or
first performing spatial bundling and/or time bundling on the at least one first ACK/NACK, and then performing spatial bundling and/or time bundling on the at least one second ACK/NACK.

Optionally, the receiving at least two ACKs/NACKs from one uplink subframe includes:
receiving, on the uplink subframe, the at least two ACKs/NACKs sent by using a PUCCH format 3.

Optionally, the receiving at least two ACKs/NACKs from one uplink subframe includes:
receiving, on the uplink subframe, the at least two ACKs/NACKs sent by using a PUCCH format 1b with channel selection.

Optionally, the preset bit quantity threshold is 4; and
the at least two ACKs/NACKs received from the uplink subframe by the receiving module 1001 occupy 4 bits, where 2 bits are used to feed back a receiving status of the first signal sent on one carrier on the first frequency band, and the other 2 bits are used to feed back a receiving status of the second signal sent on one carrier on the second frequency band; or
the at least two ACKs/NACKs received from the uplink subframe by the receiving module 1001 occupy 4 bits, where 2 bits are separately used to feed back a receiving status of the first signal sent on two carriers on the first frequency band, and the other 2 bits are used to feed back a receiving status of the second signal sent on two carriers on the second frequency band; or
the at least two ACKs/NACKs received from the uplink subframe by the receiving module 1001 occupy 4 bits, where 1 bit is used to feed back a receiving status of the first signal sent on one carrier on the first frequency band, and the other 3 bits are separately used to feed back a receiving status of the second signal sent on three carriers on the second frequency band.

Optionally, a PUCCH resource occupied by the first ACK/NACK is determined by using a sequence number of a control channel element CCE of a physical downlink control channel PDCCH or high-layer signaling.

Optionally, when a first downlink subframe prior to the uplink subframe has a physical downlink control channel PDCCH resource, a PUCCH resource occupied by the first ACK/NACK is determined by using a sequence number of a control channel element CCE of a PDCCH; or
when a first downlink subframe prior to the uplink subframe has no PDCCH resource, a PUCCH resource occupied by the first ACK/NACK is determined by using high-layer signaling, where
the first downlink subframe is a subframe sending a data scheduling instruction, and the data scheduling instruction is used to schedule data fed back by the first ACK/NACK. Optionally, the first frequency band includes one segment of consecutive spectrum resources or multiple segments of discrete spectrum resources; and/or
the second frequency band includes one segment of consecutive spectrum resources or multiple segments of discrete spectrum resources.

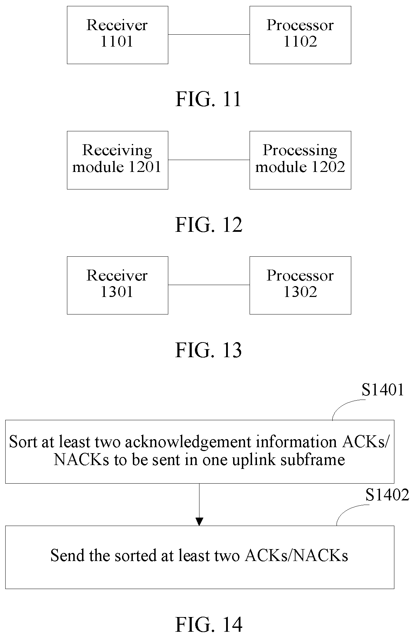

FIG. 11 is a schematic structural diagram of a second network device according to an embodiment of the present invention. As shown in FIG. 11, the network device includes:
a receiver 1101, configured to receive at least two acknowledgement information ACKs/NACKs from one uplink subframe;
a processor 1102, configured to obtain, according to the following sequence, at least one first ACK/NACK and at least one second ACK/NACK from the at least two ACKs/NACKs received by the receiver 1101:
   the at least one first ACK/NACK being first, and the at least one second ACK/NACK being second, or
   the at least one second ACK/NACK being first, and the at least one first ACK/NACK being second, where
   the first ACK/NACK is used to feed back a receiving status of a first signal, and the first signal is transmitted on a first frequency band; the second ACK/NACK is used to feed back a receiving status of a second signal, and the second signal is transmitted on a second frequency band; the first frequency band is a frequency band used for device-to-device D2D transmission and/or a frequency band used for both uplink transmission and downlink transmission; and the second frequency band is a frequency band used for downlink transmission.

For specific implementation of the receiver 1101, refer to the foregoing receiving module 1001, and for specific implementation of the processor 1102, refer to the foregoing processing module 1002. Repeated parts are not described again.

FIG. 12 is a schematic structural diagram of a third network device according to an embodiment of the present invention. As shown in FIG. 12, the network device includes:
a processing module 1202, configured to: determine, during CA, a quantity of bits bits of an acknowledgement information ACK/NACK to be received from one uplink subframe by the network device; and
a receiving module 1201, configured to receive at least two ACKs/NACKs from the uplink subframe, where
the processing module 1202 is further configured to: determine that the quantity of bits of the ACK/NACK to be received from the uplink subframe is greater than a preset bit quantity threshold, and determine that the at least two ACKs/NACKs received from the uplink subframe are generated, by user equipment that sends the at least two ACKs/NACKs, by bundling, according to the following manner and according to a sequence number of a carrier in which a signal corresponding to each ACK/NACK of ACKs/NACKs to be sent on the uplink subframe is located, the ACKs/NACKs to be sent on the uplink subframe:
   first performing bundling on a carrier with a small sequence number, and then performing bundling on a carrier with a large sequence number, or
   first performing bundling on a carrier with a large sequence number, and then performing bundling on a carrier with a small sequence number.

Optionally, the at least two ACKs/NACKs received from the uplink subframe by the receiving module 1201 are generated, by the user equipment that sends the at least two ACKs/NACKs, by bundling, according to the following manner, the ACKs/NACKs to be sent on the uplink subframe:
performing spatial bundling, so that a quantity of bits of the bundled at least two ACKs/NACKs is not greater than the preset bit quantity threshold; or
performing time bundling, so that a quantity of bits of the bundled at least two ACKs/NACKs is not greater than the preset bit quantity threshold; or
first performing spatial bundling, and if a quantity of bits of the at least two ACKs/NACKs on which spatial bundling is performed is greater than the preset bit quantity threshold, then performing time bundling, so that a quantity of bits of the bundled at least two ACKs/NACKs is not greater than the preset bit quantity threshold; or
first performing time bundling, and if a quantity of bits of the at least two ACKs/NACKs on which time bundling is performed is greater than the preset bit quantity threshold, then performing spatial bundling, so that a quantity of bits of the bundled at least two ACKs/NACKs is not greater than the preset bit quantity threshold.

Optionally, the at least two ACKs/NACKs received from the uplink subframe by the receiving module 1201 are sent by using a physical uplink control channel PUCCH format 3.

Optionally, the at least two ACKs/NACKs received from the uplink subframe by the receiving module 1201 are sent by using a PUCCH format 1b with channel selection.

Optionally, the preset bit quantity threshold is 4; and
the at least two ACKs/NACKs received from the uplink subframe by the receiving module 1201 occupy 4 bits, where 2 bits are used to feed back a receiving status of a first signal sent on one carrier on a first frequency band, and the other 2 bits are used to feed back a receiving status of a second signal sent on one carrier on a second frequency band; or
the at least two ACKs/NACKs received from the uplink subframe by the receiving module 1201 occupy 4 bits, where 2 bits are separately used to feed back a receiving status of a first signal sent on two carriers on a first frequency band, and the other 2 bits are used to feed back a receiving status of a second signal sent on two carriers on a second frequency band; or
the at least two ACKs/NACKs received from the uplink subframe by the receiving module 1201 occupy 4 bits, where 1 bit is used to feed back a receiving status of a first signal sent on one carrier on a first frequency band, and the other 3 bits are separately used to feed back a receiving status of a second signal sent on three carriers on a second frequency band, where
the first frequency band is a frequency band used for D2D transmission and/or a frequency band used for both uplink transmission and downlink transmission; and the second frequency band is a frequency band used for downlink transmission.

FIG. 13 is a schematic structural diagram of a fourth network device according to an embodiment of the present invention. As shown in FIG. 13, the network device includes:
a processor 1302, configured to determine, during CA, a quantity of bits bits of an acknowledgement information ACK/NACK to be received from one uplink subframe by the network device; and
a receiver 1301, configured to receive at least two ACKs/NACKs from the uplink subframe, where
the processor 1302 is further configured to: determine that the quantity of bits of the ACK/NACK to be received from the uplink subframe is greater than a preset bit quantity threshold, and determine that the at least two ACKs/NACKs received from the uplink subframe are generated, by user equipment that sends the at least two ACKs/NACKs, by bundling, according to the following manner and according to a sequence number of a carrier in which a signal corresponding to each ACK/NACK of ACKs/NACKs to be sent on the uplink subframe is located, the ACKs/NACKs to be sent on the uplink subframe:
   first performing bundling on a carrier with a small sequence number, and then performing bundling on a carrier with a large sequence number, or
   first performing bundling on a carrier with a large sequence number, and then performing bundling on a carrier with a small sequence number.

For specific implementation of the receiver 1301, refer to the foregoing receiving module 1201, and for specific implementation of the processor 1302, refer to the foregoing processing module 1202. Repeated parts are not described again.

FIG. 14 is a flowchart of a first acknowledgement information sending method according to an embodiment of the present invention. As shown in FIG. 14, the method includes the following steps:
S1401: Sort, according to the following sequence, at least two acknowledgement information ACKs/NACKs to be sent in one uplink subframe, where the at least two ACKs/NACKs include at least one first ACK/NACK and at least one second ACK/NACK.

The at least one first ACK/NACK is first, and the at least one second ACK/NACK is second, or
he at least one second ACK/NACK is first, and the at least one first ACK/NACK is second.

The first ACK/NACK is used to feed back a receiving status of a first signal, and the first signal is transmitted on a first frequency band; the second ACK/NACK is used to feed back a receiving status of a second signal, and the second signal is transmitted on a second frequency band; the first frequency band is a frequency band used for device-to-device D2D transmission and/or a frequency band used for both uplink transmission and downlink transmission; and the second frequency band is a frequency band used for downlink transmission.

S1402: Send the sorted at least two ACKs/NACKs.

Optionally, the sorting at least two ACKs/NACKs to be sent in one uplink subframe in step S1401 further includes:
sorting the at least one first ACK/NACK according to a sequence or reverse sequence of a sequence number of a carrier in which the first signal corresponding to the first ACK/NACK is located; and
sorting the at least one second ACK/NACK according to a sequence or reverse sequence of a sequence number of a carrier in which the second signal corresponding to the second ACK/NACK is located.

Optionally, before the sending the sorted at least two ACKs/NACKs in step S1402, the method further includes:
determining a quantity of bits bits of the to-be-sent at least two ACKs/NACKs; and
determining that the determined quantity of bits is greater than a preset bit quantity threshold;
before the sorting at least two ACKs/NACKs to be sent in one uplink subframe in step S1401, the method further includes:
   bundling the at least one first ACK/NACK, and bundling the at least one second ACK/NACK; and
   the sorting at least two ACKs/NACKs to be sent in one uplink subframe in step S1401 includes:
      sorting the bundled at least one first ACK/NACK and the bundled at least one second ACK/NACK.

Optionally, before the sending the sorted at least two ACKs/NACKs in step S1402, the method further includes:
determining a quantity of bits bits of the to-be-sent at least two ACKs/NACKs, and determining that the determined quantity of bits is greater than a preset bit quantity threshold;
after the sorting at least two ACKs/NACKs to be sent in one uplink subframe, the method further includes:
   bundling at least one first ACK/NACK of the sorted at least two ACKs/NACKs, and bundling at least one second ACK/NACK of the sorted at least two ACKs/NACKs.

Optionally, the bundling includes:
performing spatial bundling, so that a quantity of bits of the bundled at least two ACKs/NACKs is not greater than the preset bit quantity threshold; or
performing time bundling, so that a quantity of bits of the bundled at least two ACKs/NACKs is not greater than the preset bit quantity threshold; or
first performing spatial bundling, and if a quantity of bits of the at least two ACKs/NACKs on which spatial bundling is performed is greater than the preset bit quantity threshold, then performing time bundling, so that a quantity of bits of the bundled at least two ACKs/NACKs is not greater than the preset bit quantity threshold; or
first performing time bundling, and if a quantity of bits of the at least two ACKs/NACKs on which time bundling is performed is greater than the preset bit quantity threshold, then performing spatial bundling, so that a quantity of bits of the bundled at least two ACKs/NACKs is not greater than the preset bit quantity threshold.

Optionally, the bundling includes performing bundling according to the following manner and according to a sequence number of a carrier in which a signal corresponding to each ACK/NACK of the at least two ACKs/NACKs to be sent on the uplink subframe is located:
first performing spatial bundling and/or time bundling on a carrier with a small sequence number, and then performing spatial bundling and/or time bundling on a carrier with a large sequence number; or
first performing spatial bundling and/or time bundling on a carrier with a large sequence number, and then performing spatial bundling and/or time bundling on a carrier with a small sequence number.

Optionally, the bundling includes:
first performing spatial bundling and/or time bundling on the at least one second ACK/NACK, and then performing spatial bundling and/or time bundling on the at least one first ACK/NACK; or
first performing spatial bundling and/or time bundling on the at least one first ACK/NACK, and then performing spatial bundling and/or time bundling on the at least one second ACK/NACK.

Optionally, the sending the sorted at least two ACKs/NACKs in step S1402 includes:
sending the sorted at least two ACKs/NACKs by using a physical uplink control channel PUCCH format 3.

Optionally, the sending the sorted at least two ACKs/NACKs in step S1402 includes:
sending the sorted at least two ACKs/NACKs by using a PUCCH format 1b with channel selection.

Optionally, the preset bit quantity threshold is 4; and
the bundled at least two ACKs/NACKs occupy 4 bits, where 2 bits are used to feed back a receiving status of the first signal sent on one carrier on the first frequency band, and the other 2 bits are used to feed back a receiving status of the second signal sent on one carrier on the second frequency band; or
the bundled at least two ACKs/NACKs occupy 4 bits, where 2 bits are separately used to feed back a receiving status of the first signal sent on two carriers on the first frequency band, and the other 2 bits are used to feed back a receiving status of the second signal sent on two carriers on the second frequency band; or
the bundled at least two ACKs/NACKs occupy 4 bits, where 1 bit is used to feed back a receiving status of the first signal sent on one carrier on the first frequency band, and the other 3 bits are separately used to feed back a receiving status of the second signal sent on three carriers on the second frequency band.

Optionally, a PUCCH resource occupied by the first ACK/NACK is determined by using a sequence number of a control channel element CCE of a physical downlink control channel PDCCH or high-layer signaling.

Optionally, when a first downlink subframe prior to the uplink subframe has a physical downlink control channel PDCCH resource, a PUCCH resource occupied by the first ACK/NACK is determined by using a sequence number of a control channel element CCE of a PDCCH; or
when a first downlink subframe prior to the uplink subframe has no PDCCH resource, a PUCCH resource occupied by the first ACK/NACK is determined by using high-layer signaling, where
the first downlink subframe is a subframe sending a data scheduling instruction, and the data scheduling instruction is used to schedule data fed back by the first ACK/NACK. Optionally, the first frequency band includes one segment of consecutive spectrum resources or multiple segments of discrete spectrum resources; and/or
the second frequency band includes one segment of consecutive spectrum resources or multiple segments of discrete spectrum resources.

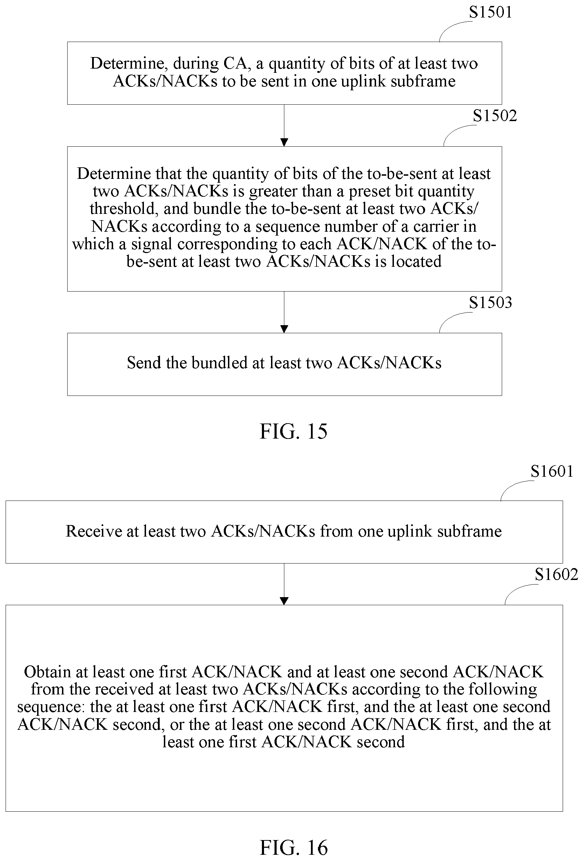

FIG. 15 is a flowchart of a second acknowledgement information sending method according to an embodiment of the present invention. As shown in FIG. 15, the method includes the following steps:
S1501: Determine, during CA, a quantity of bits of at least two ACKs/NACKs to be sent in one uplink subframe.
S1502: Determine that the quantity of bits of the to-be-sent at least two ACKs/NACKs is greater than a preset bit quantity threshold, and bundle the to-be-sent at least two ACKs/NACKs according to the following manner and according to a sequence number of a carrier in which a signal corresponding to each ACK/NACK of the to-be-sent at least two ACKs/NACKs is located:
   first performing bundling on a carrier with a small sequence number, and then performing bundling on a carrier with a large sequence number, or
   first performing bundling on a carrier with a large sequence number, and then performing bundling on a carrier with a small sequence number.
S1503: Send the bundled at least two ACKs/NACKs.

Optionally, the bundling the to-be-sent at least two ACKs/NACKs in step S1502 includes:
performing spatial bundling on the to-be-sent at least two ACKs/NACKs, so that a quantity of bits of the bundled at least two ACKs/NACKs is not greater than the preset bit quantity threshold; or
performing spatial bundling on the to-be-sent at least two ACKs/NACKs, so that a quantity of bits of the bundled at least two ACKs/NACKs is not greater than the preset bit quantity threshold; or
first performing spatial bundling on the to-be-sent at least two ACKs/NACKs, and if a quantity of bits of the at least two ACKs/NACKs on which spatial bundling is performed is greater than the preset bit quantity threshold, then performing time bundling, so that a quantity of bits of the bundled at least two ACKs/NACKs is not greater than the preset bit quantity threshold; or
first performing time bundling on the to-be-sent at least two ACKs/NACKs, and if a quantity of bits of the at least two ACKs/NACKs on which time bundling is performed is greater than the preset bit quantity threshold, then performing spatial bundling, so that a quantity of bits of the bundled at least two ACKs/NACKs is not greater than the preset bit quantity threshold. Optionally, the sending the bundled at least two ACKs/NACKs in step S1503 includes:
sending the bundled at least two ACKs/NACKs by using a physical uplink control channel PUCCH format 3.

Optionally, the sending the bundled at least two ACKs/NACKs in step S1503 includes:
sending the bundled at least two ACKs/NACKs by using a PUCCH format 1b with channel selection.

Optionally, the preset bit quantity threshold is 4; and
the bundled at least two ACKs/NACKs occupy 4 bits, where 2 bits are used to feed back a receiving status of a first signal sent on one carrier on a first frequency band, and the other 2 bits are used to feed back a receiving status of a second signal sent on one carrier on a second frequency band; or
the bundled at least two ACKs/NACKs occupy 4 bits, where 2 bits are separately used to feed back a receiving status of a first signal sent on two carriers on a first frequency band, and the other 2 bits are used to feed back a receiving status of a second signal sent on two carriers on a second frequency band; or
the bundled at least two ACKs/NACKs occupy 4 bits, where 1 bit is used to feed back a receiving status of a first signal sent on one carrier on a first frequency band, and the other 3 bits are separately used to feed back a receiving status of a second signal sent on three carriers on a second frequency band, where
the first frequency band is a frequency band used for device-to-device D2D transmission and/or a frequency band used for both uplink transmission and downlink transmission; and the second frequency band is a frequency band used for downlink transmission.

FIG. 16 is a flowchart of a third acknowledgement information receiving method according to an embodiment of the present invention. As shown in FIG. 16, the method includes the following steps:
S1601: Receive at least two ACKs/NACKs from one uplink subframe.
S1602: Obtain at least one first ACK/NACK and at least one second ACK/NACK from the received at least two ACKs/NACKs according to the following sequence:
   The at least one first ACK/NACK is first, and the at least one second ACK/NACK is second, or
   the at least one second ACK/NACK is first, and the at least one first ACK/NACK is second.

The first ACK/NACK is used to feed back a receiving status of a first signal, and the first signal is transmitted on a first frequency band; the second ACK/NACK is used to feed back a receiving status of a second signal, and the second signal is transmitted on a second frequency band; the first frequency band is a frequency band used for device-to-device D2D transmission and/or a frequency band used for both uplink transmission and downlink transmission; and the second frequency band is a frequency band used for downlink transmission.

Optionally, the at least one first ACK/NACK is sorted according to a sequence or reverse sequence of a sequence number of a carrier in which the first signal corresponding to the at least one first ACK/NACK is located; and
the at least one second ACK/NACK is sorted according to a sequence or reverse sequence of a sequence number of a carrier in which the second signal corresponding to the at least one second ACK/NACK is located.

Optionally, before the obtaining at least one first ACK/NACK and at least one second ACK/NACK from the received at least two ACKs/NACKs in step S1602, the method further includes:
determining a quantity of bits bits of an ACK/NACK to be received on the uplink subframe; and
determining that the determined quantity of bits is greater than a preset bit quantity threshold, and determining that the received at least two ACKs/NACKs include the bundled at least one first ACK/NACK and the bundled at least one second ACK/NACK.

Optionally, the bundled at least one first ACK/NACK and the bundled at least one second ACK/NACK are bundled according to the following manner:
performing spatial bundling, so that a quantity of bits of the bundled at least two ACKs/NACKs is not greater than the preset bit quantity threshold; or
performing time bundling, so that a quantity of bits of the bundled at least two ACKs/NACKs is not greater than the preset bit quantity threshold; or
first performing spatial bundling, and if a quantity of bits of the at least two ACKs/NACKs on which spatial bundling is performed is greater than the preset bit quantity threshold, then performing time bundling, so that a quantity of bits of the bundled at least two ACKs/NACKs is not greater than the preset bit quantity threshold; or
first performing time bundling, and if a quantity of bits of the at least two ACKs/NACKs on which time bundling is performed is greater than the preset bit quantity threshold, then performing spatial bundling, so that a quantity of bits of the bundled at least two ACKs/NACKs is not greater than the preset bit quantity threshold.

Optionally, the bundled at least one first ACK/NACK and the bundled at least one second ACK/NACK are bundled, by user equipment that sends the at least two ACKs/NACKs, according to the following manner and according to a sequence number of a carrier in which a signal corresponding to each ACK/NACK to be sent on the uplink subframe is located:
first performing spatial bundling and/or time bundling on a carrier with a small sequence number, and then performing spatial bundling and/or time bundling on a carrier with a large sequence number; or
first performing spatial bundling and/or time bundling on a carrier with a large sequence number, and then performing spatial bundling and/or time bundling on a carrier with a small sequence number.

Optionally, the bundled at least one first ACK/NACK and the bundled at least one second ACK/NACK are bundled according to the following manner:
first performing spatial bundling and/or time bundling on the at least one second ACK/NACK, and then performing spatial bundling and/or time bundling on the at least one first ACK/NACK; or
first performing spatial bundling and/or time bundling on the at least one first ACK/NACK, and then performing spatial bundling and/or time bundling on the at least one second ACK/NACK.

Optionally, the receiving at least two ACKs/NACKs from one uplink subframe in step S1601 includes:
receiving, on the uplink subframe, the at least two ACKs/NACKs sent by using a PUCCH format 3.

Optionally, the receiving at least two ACKs/NACKs from one uplink subframe in step S1601 includes:
receiving, on the uplink subframe, the at least two ACKs/NACKs sent by using a PUCCH format 1b with channel selection.

Optionally, the preset bit quantity threshold is 4; and
the at least two ACKs/NACKs received from the uplink subframe occupy 4 bits, where 2 bits are used to feed back a receiving status of the first signal sent on one carrier on the first frequency band, and the other 2 bits are used to feed back a receiving status of the second signal sent on one carrier on the second frequency band; or
the at least two ACKs/NACKs received from the uplink subframe occupy 4 bits, where 2 bits are separately used to feed back a receiving status of the first signal sent on two carriers on the first frequency band, and the other 2 bits are used to feed back a receiving status of the second signal sent on two carriers on the second frequency band; or
the at least two ACKs/NACKs received from the uplink subframe occupy 4 bits, where 1 bit is used to feed back a receiving status of the first signal sent on one carrier on the first frequency band, and the other 3 bits are used to feed back a receiving status of the second signal sent on three carriers on the second frequency band.

Optionally, a PUCCH resource occupied by the first ACK/NACK is determined by using a sequence number of a control channel element CCE of a physical downlink control channel PDCCH or high-layer signaling.

Optionally, when a first downlink subframe prior to the uplink subframe has a physical downlink control channel PDCCH resource, a PUCCH resource occupied by the first ACK/NACK is determined by using a sequence number of a control channel element CCE of a PDCCH; or
when a first downlink subframe prior to the uplink subframe has no PDCCH resource, a PUCCH resource occupied by the first ACK/NACK is determined by using high-layer signaling, where
the first downlink subframe is a subframe sending a data scheduling instruction, and the data scheduling instruction is used to schedule data fed back by the first ACK/NACK. Optionally, the first frequency band includes one segment of consecutive spectrum resources or multiple segments of discrete spectrum resources; and/or
the second frequency band includes one segment of consecutive spectrum resources or multiple segments of discrete spectrum resources.

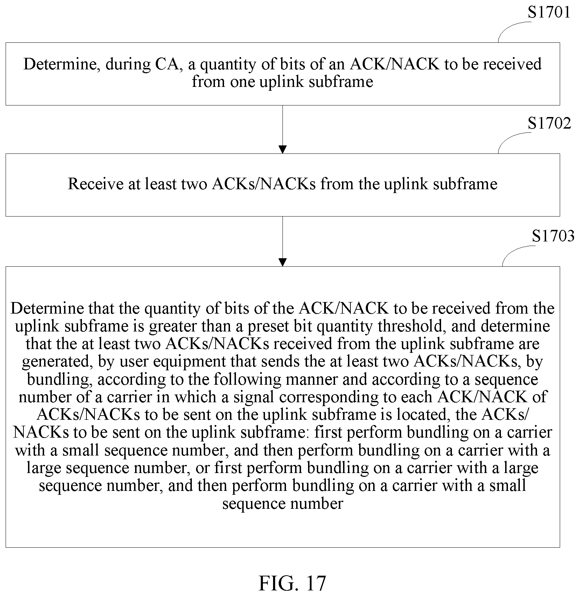

FIG. 17 is a flowchart of a fourth acknowledgement information receiving method according to an embodiment of the present invention. As shown in FIG. 17, the method includes the following steps:
S1701: Determine, during CA, a quantity of bits of an ACK/NACK to be received from one uplink subframe.
S1702: Receive at least two ACKs/NACKs from the uplink subframe.
S1703: Determine that the quantity of bits of the ACK/NACK to be received from the uplink subframe is greater than a preset bit quantity threshold, and determine that the at least two ACKs/NACKs received from the uplink subframe are generated, by user equipment that sends the at least two ACKs/NACKs, by bundling, according to the following manner and according to a sequence number of a carrier in which a signal corresponding to each ACK/NACK of ACKs/NACKs to be sent on the uplink subframe is located, the ACKs/NACKs to be sent on the uplink subframe:
   first performing bundling on a carrier with a small sequence number, and then performing bundling on a carrier with a large sequence number, or
   first performing bundling on a carrier with a large sequence number, and then performing bundling on a carrier with a small sequence number.

Step S1701 may be performed first, and then step S1702 is performed; or step S1702 may be performed first, and then step S1701 is performed.

Optionally, the at least two ACKs/NACKs received from the uplink subframe in step S1702 are generated, by user equipment that sends the at least two ACKs/NACKs, by bundling, according to the following manner, ACKs/NACKs to be sent on the uplink subframe:
performing spatial bundling, so that a quantity of bits of the bundled at least two ACKs/NACKs is not greater than the preset bit quantity threshold; or
performing time bundling, so that a quantity of bits of the bundled at least two ACKs/NACKs is not greater than the preset bit quantity threshold; or
first performing spatial bundling, and if a quantity of bits of the at least two ACKs/NACKs on which spatial bundling is performed is greater than the preset bit quantity threshold, then performing time bundling, so that a quantity of bits of the bundled at least two ACKs/NACKs is not greater than the preset bit quantity threshold; or
first performing time bundling, and if a quantity of bits of the at least two ACKs/NACKs on which time bundling is performed is greater than the preset bit quantity threshold, then performing spatial bundling, so that a quantity of bits of the bundled at least two ACKs/NACKs is not greater than the preset bit quantity threshold.

Optionally, the at least two ACKs/NACKs received from the uplink sub frame in step S1702 are sent by using a physical uplink control channel PUCCH format 3.

Optionally, the at least two ACKs/NACKs received from the uplink sub frame in step S1702 are sent by using a PUCCH format 1b with channel selection.

Optionally, the preset bit quantity threshold is 4; and
the at least two ACKs/NACKs received from the uplink subframe occupy 4 bits, where 2 bits are used to feed back a receiving status of a first signal sent on one carrier on a first frequency band, and the other 2 bits are used to feed back a receiving status of a second signal sent on one carrier on a second frequency band; or
the at least two ACKs/NACKs received from the uplink subframe occupy 4 bits, where 2 bits are separately used to feed back a receiving status of a first signal sent on two carriers on a first frequency band, and the other 2 bits are used to feed back a receiving status of a second signal sent on two carriers on a second frequency band; or
the at least two ACKs/NACKs received from the uplink subframe occupy 4 bits, where 1 bit is used to feed back a receiving status of a first signal sent on one carrier on a first frequency band, and the other 3 bits are separately used to feed back a receiving status of a second signal sent on three carriers on a second frequency band, where
the first frequency band is a frequency band used for D2D transmission and/or a frequency band used for both uplink transmission and downlink transmission; and the second frequency band is a frequency band used for downlink transmission.

### Embodiment 1

In Embodiment 1, user equipment transmits an ACK/NACK by using a PUCCH Format 3.

According to definitions in the current 3^{rd} Generation Partner Project (3^{rd} Generation Partener Project, 3GPP) Technical Specification (Technical Specification, TS) 36.213 V10, when a PUCCH format 3 is used to transmit an ACK/NACK, the user equipment may transmit a maximum of 20 bits of ACKs/NACKs in one uplink subframe, and the foregoing preset bit quantity threshold is 20.

Currently, during carrier aggregation, scheduling of a maximum of five groups of carriers is supported. According to a service traffic demand, when a DSS technology is used, downlink signals may be transmitted on uplink frequency bands in the five groups of carriers. With reference to uplink and downlink subframe ratios of a Time Division Duplex (Time Division Duplex, TDD) system, subframes of some uplink frequency bands may be configured to be used for downlink transmission. Certainly, an uplink resource may also be configured, in another manner, to be used for downlink transmission.

Table 1 shows a time sequence fed back by an ACK/NACK in a current TDD system. In the table, numbers without brackets represent which subframe of acknowledgement information is fed back; and numbers in brackets represent how many subframes of acknowledgement information need to be fed back.

**Table 1**

| Subframe ratio | Subframe *n* | | | | | | | | | |
|---|---|---|---|---|---|---|---|---|---|---|
| | 0 | 1 | 2 | 3 | 4 | 5 | 6 | 7 | 8 | 9 |
| 0 | - | - | 6[1] | - | 4[1] | - | - | 6[1] | - | 4[1] |
| 1 | - | - | 7, 6[2] | 4[1] | - | - | - | 7, 6[2] | 4[1] | - |
| 2 | - | - | 8, 7, 4, 6[4] | - | - | - | - | 8, 7, 4, 6[4] | - | - |
| 3 | - | - | 7, 6, 11[3] | 6, 5[2] | 5, 4[2] | - | - | - | - | - |
| 4 | - | - | 12, 8, 7, 11[4] | 6,5, 4, 7[4] | - | - | - | - | - | - |
| 5 | - | - | 13, 12, 9, 8, 7, 5, 4, 11, 6[9] | - | - | - | - | - | - | - |
| 6 | - | - | 7[1] | 7[1] | 5[1] | - | - | 7[1] | 7[1] | - |

When a DSS communication manner is used, a transmission manner in the TDD system is used on an uplink frequency band, and when various subframe ratios are obtained through calculation, a quantity of uplink subframes that may be used to feed back an ACK/NACK, and a quantity of downlink subframes that need to be fed back are shown as follows. Herein, for ease of representation, a same subframe ratio is used for each uplink frequency band. U/D represents a quantity of uplink subframes/a quantity of downlink subframes; and Dlband represents that all subframes are downlink, so that a quantity of subframes is 10;
subframe ratio 0: U/D=6:4, U/(D+Dlband)=6/(4+10)=6:14, and 5 carriers correspond to 70 downlink subframes;
subframe ratio 1: U/D=4:6, U/(D+Dlband)=4/(6+10)=4:16, and 5 carriers correspond to 80 downlink subframes;
subframe ratio 2: U/D=2:8, U/(D+Dlband)=2/(8+10) =2:18, and 5 carrier correspond to 90 downlink subframes;
subframe ratio 3: U/D=3:7, U/(D+Dlband)=3/(7+10)=3:17, and 5 carriers correspond to 85 downlink subframes;
subframe ratio 4: U/D=2:8, U/(D+Dlband)=2/(8+10)=2:18, and 5 carriers correspond to 90 downlink subframes;
subframe ratio 5: U/D=1:9, U/(D+D1band)=1/(9+10)=1:19, and 5 carriers correspond to 95 downlink subframes; and
subframe ratio 6: U/D=5:5, U/(D+Dlband)=5/(4+15)=5:15, and 5 carriers correspond to 75 downlink subframes.

According to the current standard definitions, when a PUCCH format 3 is used to transmit an ACK/NACK, the user equipment may transmit a maximum of 20 bits of ACKs/NACKs in one uplink subframe. However, according to the foregoing calculation, even though each subframe only feeds back 1 bit of ACK/NACK, there may also exist a case in which a quantity of bits of an ACK/NACK to be sent in one uplink subframe exceeds 20 bits, for example: when there are 5 carriers, or when subframe ratio 2, 3, 4, or 5 is used.

Similarly, for a D2D transmission manner, there also exists a case in which a quantity of bits of an ACK/NACK to be sent in one uplink subframe by the user equipment exceeds 20 bits. Optionally, in Embodiment 1, the user equipment may send at least two ACKs/NACKs according to the following manner:
performing sorting according to the following sequence, and sending the sorted at least two ACKs/NACKs to a network device:
a first ACK/NACK being first, and a second ACK/NACK being second.

In the first ACK/NACK, sorting is performed according to a sequence number of a carrier in which a signal corresponding to the first ACK/NACK is located, for example: bundling is first performed on a carrier with a small sequence number, and then bundling is performed on a carrier with a large sequence number, or bundling is first performed on a carrier with a large sequence number, and then bundling is performed on a carrier with a small sequence number; and sorting is performed according to the sequence number of the carrier. In the second ACK/NACK, likewise, sorting may also be performed according to the foregoing manner and according to a sequence numbers of a carrier in which a signal corresponding to the second ACK/NACK is located.

If the quantity of bits of the ACK/NACK to be sent in one uplink subframe exceeds 20 bits, bundling may be performed according to one or more of the following rules:
rule 1: first perform spatial bundling, and then perform time bundling;
rule 2: first perform bundling on the second ACK/NACK, and then perform bundling on the first ACKs/NACKs; and
rule 3: first perform bundling on a carrier with a large sequence number, and then perform bundling on a carrier with a small sequence number.

For example: if the quantity of bits of the ACK/NACK to be sent in one uplink subframe exceeds 20 bits, spatial bundling is first performed between downlink codewords.

A first optional implementation manner is: starting bundling from a downlink carrier with a largest sequence number (that is, a carrier on the foregoing second frequency band), and finally performing bundling on primary carrier feedback information.

A second optional implementation manner is: first performing spatial bundling on the second ACK/NACK; and if the quantity of bits of the bundled ACK/NACK is not greater than 20 bits, no longer performing spatial bundling; if the quantity of bits of the bundled ACK/NACK is still greater than 20 bits, then performing spatial bundling on the first ACK/NACK.

If the quantity of bits of the ACKs/NACKs on which spatial bundling is performed in one of the foregoing two optional implementation manners still exceeds 20 bits, then time bundling is performed.

An optional implementation manner of time bundling is similar to an optional implementation manner of the foregoing spatial bundling.

A first optional implementation manner is: starting time bundling from a downlink carrier with a largest sequence number (that is, a carrier on the foregoing second frequency band), and finally performing bundling on primary carrier feedback information, until the quantity of bits of the bundled ACK/NACK is not greater than 20 bits.

A second optional implementation manner is: first performing time bundling on the second ACK/NACK; and if the quantity of bits of the bundled ACK/NACK is not greater than 20 bits, no longer performing time bundling; if a quantity of bits of the bundled ACK/NACK is still greater than 20 bits, then performing time bundling on the first ACK/NACK.

Because the five groups of carriers include a total of 10 uplink/downlink frequency bands, a final bundling result may ensure that the quantity of bits of the bundled ACK/NACK is not greater than 20 bits.

For example: the user equipment simultaneously uses 8 carriers to perform data transmission, where sequence numbers of the 8 carriers separately are 1, 2, 3, 4, 5, 6, 7, and 8. The ACK/NACK to be sent in one uplink subframe by the user equipment includes feedback information of data transmitted on the 8 carriers. It is assumed that a quantity of MIMO space streams of each carrier is 2, and TDD configuration of each carrier is TDD configuration 2 shown in FIG. 5.

In FIG. 5, "D" represents a downlink subframe, "U" represents an uplink subframe, and "S" represents a special subframe. The S subframe may also be used for downlink data transmission, and a serial number above each subframe represents a subframe number of the subframe.

If acknowledgements ACKs/NACKs of the foregoing 8 subframes in one radio frame are all sent in the foregoing uplink subframe, for the foregoing carriers 1 to 8, a quantity of bits of an ACK/NACK to be sent in the uplink subframe by each carrier is 8 bits. There are a total of 8 carriers, so that the quantity of bits of the ACKs/NACKs to be sent in the uplink subframe is 64 bits, which exceeds the preset bit quantity threshold 20 bits.

For different codewords on a same carrier, each codeword feeds back 1 bit of ACK/NACK, data transmission fed back by ACKs/NACKs corresponding to the two codewords occupies a same time-frequency resource, only except that the codewords are different. During bundling, spatial bundling is performed first, and when spatial bundling is performed, bundling is performed according to a sequence of the sequence number of the carrier.

First, for bundling of a carrier whose sequence number is 1 ("carrier 1" for short), in 8 bits of ACKs/NACKs, bundling is performed on every two ACKs/NACKs that feed back a same time-frequency resource and that are transmitted by data on different codewords, for the carrier 1, a quantity of bits of a bundled ACK/NACK is 4 bits, and after the bundling, 4+8+8+8+8+8+8+8=60 bits of ACKs/NACKs further need to be transmitted in the uplink subframe, which are still greater than 20 bits;
then, bundling is performed on the carrier 2, where the rule is the same as the above, and after the bundling, 4+4+8+8+8+8+8+8=56 bits of ACKs/NACKs further need to be transmitted in the uplink subframe, which are still greater than 20 bits; and
bundling continues to be performed, and after spatial bundling is performed on all the 8 carriers according to the foregoing rule, 4+4+4+4+4+4+4+4=32 bits of ACKs/NACKs need to be transmitted in the uplink subframe, which are still greater than 20 bits.

Next, time bundling is performed. First, time bundling is performed on the carrier 1. After the time bundling, a quantity of bits of ACKs/NACKs to be sent correspondingly in the foregoing uplink subframe by each carrier is 4 bits, and time bundling may be performed on the 4 bits of ACKs/NACKs.

For the carrier 1, a quantity of bits of a bundled ACK/NACK may be 1 bit, or may be 2 bits. If the quantity of bits of the bundled ACK/NACK is 1 bit, the 4 ACKs/NACKs are all ACK, and the bundled ACK/NACK is ACK. Optionally, when one or more of the 4 ACKs/NACKs are NACK or DTX, the bundled ACK/NACK is NACK.

If the quantity of bits of the bundled ACK/NACK is 2 bits, "00" may represent that an ACK/NACK of at least one subframe corresponds to NACK/DTX; "01" may represent that a first ACK/NACK is ACK; "10" may represent that a first and second ACK/NACK are both ACKs; and "11" may represent that a first, second, and third ACK/NACK are all ACKs. Herein, meanings of the foregoing statuses 00/01/10/11 being only 2 bits are an example. During actual implementation, redefinition may be made according to a status.

If for the carrier 1, the quantity of bits of the bundled ACK/NACK is 1 bit, 1+4+4+4+4+4+4+4=29 bits of ACKs/NACKs need transmitted in the uplink subframe, which are still greater than 20 bits.

Then, time bundling is performed on the carrier 2, where the rule is the same as that for time bundling of the carrier 1, and after the bundling, 1+1+4+4+4+4+4+4=26 bits of ACKs/NACKs need to be transmitted in the uplink subframe, which are still greater than 20 bits; then time bundling is performed on the carrier 3, where the rule is the same as that for time bundling of the carrier 1, and after the bundling, 1+1+1+4+4+4+4+4=23 bits need to be transmitted on the uplink subframe, which are still greater than 20 bits; and then time bundling is performed on the carrier 4, where the rule is the same as that for time bundling of the carrier 1, and after the bundling, 1+1+1+1+4+4+4+4=20 bits need to be transmitted in the uplink subframe, which are not greater than 20 bits. Therefore, time bundling is no longer performed on the carriers 6, 7, and 8, and the bundling ends.

### Embodiment 2

In Embodiment 2, user equipment performs transmission by using a PUCCH Format 1b with channel selection.

According to definitions in the current 3GPP TS 36.213 physical layer process version number V10, when a PUCCH Format 1b with channel selection is used to transmit an ACK/NACK, the user equipment may transmit a maximum of 4 bits of ACKs/NACKs in one uplink subframe, and the foregoing preset bit quantity threshold is 4.

In Embodiment 2, the following four optional solutions are provided:
the user equipment 301 performs bundling on to-be-sent at least two ACKs/NACKs, so that:
the bundled at least two ACKs/NACKs occupy 4 bits, where 2 bits are used to feed back a receiving status of a first signal sent on one carrier on a first frequency band, and the other 2 bits are used to feed back a receiving status of a second signal sent on one carrier on a second frequency band; or
the bundled at least two ACKs/NACKs occupy 4 bits, where 2 bits are separately used to feed back a receiving status of a first signal sent on two carriers on a first frequency band, and the other 2 bits are used to feed back a receiving status of a second signal sent on two carriers on a second frequency band; or
the bundled at least two ACKs/NACKs occupy 4 bits, where 1 bit is used to feed back a receiving status of a first signal sent on one carrier on a first frequency band, and the other 3 bits are separately used to feed back a receiving status of a second signal sent on three carriers on a second frequency band.

During the bundling, spatial bundling may be performed first, and then time bundling is performed.

In conclusion, the embodiments of the present invention provide user equipment, a network device, and an acknowledgement information transmission method.

On one hand, when sending at least two ACKs/NACKs, user equipment sends the sorted at least two ACKs/NACKs, so that when a network device such as a base station receives the at least two ACKs/NACKs sent by the user equipment, it may be determined, according to a same sorting sequence used by the user equipment for sending, which ACK/NACK is used to feed back a signal transmitted in an unconventional communication manner, and which ACK/NACK is used to feed back a signal transmitted in a conventional communication manner. Therefore, a feedback mechanism of an acknowledgement information ACK/NACK if user equipment performs communication by using both a conventional communication manner and an unconventional communication manner is provided.

On the other hand, the user equipment performs bundling on at least two ACKs/NACKs to be sent in one uplink subframe, to reduce a quantity of bits occupied by an ACK/NACK.

Moreover, because a sequence number of a carrier is determined according to quality of a signal on the carrier, usually a smaller sequence number of a carrier indicates better communication quality on the carrier. If bundling is to be first performed on a carrier with a small sequence number, bundling is first performed on an ACK/NACK used to feed back a signal on a carrier with relatively good communication quality. This type of carrier has good communication quality and a stable channel status; therefore, a probability of feeding back an ACK is relatively large. A probability that multiple signals on the carrier are all retransmitted is relatively small due to the bundling, and transmission efficiency is relatively high.

If bundling is to be first performed on a carrier with a large sequence number, bundling is first performed on an ACK/NACK used to feed back a signal on a carrier with relatively poor communication quality. This type of carrier has poor communication quality; therefore, a probability of feeding back an NACK is relatively large. A probability that multiple signals on the carrier are all retransmitted may become large due to the bundling, and transmission efficiency may be reduced, but transmission reliability of a signal on this type of carrier is ensured, and transmission of multiple ACKs/NACKs can be ensured.

Persons skilled in the art should understand that the embodiments of the present invention may be provided as a method, a system, or a computer program product. Therefore, the present invention may use a form of hardware only embodiments, software only embodiments, or embodiments with a bundling of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a bundling of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams. These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the present invention without departing from the scope of the present invention. The present invention is intended to cover these modifications and variations provided that they fall within the scope of protection defined by the following claims.

## Claims

1. User equipment (301), comprising:
a processing module (601), configured to determine a sequence to be used to send at least two acknowledgement information, ACKs/NACKs, in one uplink subframe by the user equipment (301), wherein the sequence is determined according to a communication standard followed by both the user equipment (301) and a network device (302), or by transferring signaling before the user equipment (301) and the network device (302) transmit data, the at least two ACKs/NACKs comprise at least one first ACK/NACK and at least one second ACK/NACK, the first ACK/NACK and the second ACK/NACK being distinguished, and the sequence to be used to send the at least two ACKs/NACKS is sorted such that
the at least one first ACK/NACK being first, and the at least one second ACK/NACK being second in the determined sequence, or
the at least one second ACK/NACK being first, and the at least one first ACK/NACK being second in the determined sequence, wherein
the first ACK/NACK is used to feed back a receiving status of a first signal, and the first signal is transmitted on a first frequency band; the second ACK/NACK is used to feed back a receiving status of a second signal, and the second signal is transmitted on a second frequency band; the first frequency band is a frequency band used for device-to-device, D2D, transmission and/or a frequency band used for both uplink transmission and downlink transmission; and the second frequency band is a frequency band used for downlink transmission; and
a sending module (602), configured to send the at least two ACKs/NACKs sorted by the processing module (601) according to the determined sequence to the network device (302).

2. The user equipment (301) according to claim 1, wherein the processing module (601) is specifically configured to:
sort the at least one first ACK/NACK according to a sequence or reverse sequence of a sequence number of a carrier in which the first signal corresponding to the first ACK/NACK is located; and
sort the at least one second ACK/NACK according to a sequence or reverse sequence of a sequence number of a carrier in which the second signal corresponding to the second ACK/NACK is located.

3. The user equipment (301) according to claim 1 or 2, wherein the processing module (601) is further configured to: before the sending module (601) sends the sorted at least two ACKs/NACKs,
determine a quantity of bits of the at least two ACKs/NACKs to be sent by the user equipment (301);
determine that the determined quantity of bits is greater than a preset bit quantity threshold; and
before sorting the at least two ACKs/NACKs to be sent in one uplink subframe by the user equipment (301), bundle the at least one first ACK/NACK, and bundle the at least one second ACK/NACK, wherein
the processing module (601) is specifically configured to sort the bundled at least one first ACK/NACK and the bundled at least one second ACK/NACK.

4. The user equipment (301) according to claim 1 or 2, wherein the processing module (601) is further configured to: before sending the sorted at least two ACKs/NACKs,
determine a quantity of bits of the at least two ACKs/NACKs to be sent by the user equipment (301), and determine that the determined quantity of bits is greater than a preset bit quantity threshold; and
after sorting the at least two ACKs/NACKs to be sent in one uplink subframe by the user equipment (301), bundle at least one first ACK/NACK of the sorted at least two ACKs/NACKs, and bundle at least one second ACK/NACK of the sorted at least two ACKs/NACKs.

5. The user equipment (301) according to claim 3 or 4, wherein the processing module (601) is specifically configured to:
perform spatial bundling, so that a quantity of bits of the bundled at least two ACKs/NACKs is not greater than the preset bit quantity threshold; or
perform time bundling, so that a quantity of bits of the bundled at least two ACKs/NACKs is not greater than the preset bit quantity threshold; or
first perform spatial bundling, and if a quantity of bits of the at least two ACKs/NACKs on which spatial bundling is performed is greater than the preset bit quantity threshold, then perform time bundling, so that a quantity of bits of the bundled at least two ACKs/NACKs is not greater than the preset bit quantity threshold; or
first perform time bundling, and if a quantity of bits of the at least two ACKs/NACKs on which time bundling is performed is greater than the preset bit quantity threshold, then perform spatial bundling, so that a quantity of bits of the bundled at least two ACKs/NACKs is not greater than the preset bit quantity threshold.

6. The user equipment (301) according to claim 5, wherein the processing module (601) is specifically configured to perform bundling according to the following manner and according to a sequence number of a carrier in which a signal corresponding to each ACK/NACK of the at least two ACKs/NACKs to be sent on the uplink subframe is located:
first performing spatial bundling and/or time bundling on a carrier with a small sequence number, and then performing spatial bundling and/or time bundling on a carrier with a large sequence number; or
first performing spatial bundling and/or time bundling on a carrier with a large sequence number, and then performing spatial bundling and/or time bundling on a carrier with a small sequence number.

7. The user equipment (301) according to claim 5 or 6, wherein the processing module (601) is specifically configured to:
first perform spatial bundling and/or time bundling on the at least one second ACK/NACK, and then perform spatial bundling and/or time bundling on the at least one first ACK/NACK; or
first perform spatial bundling and/or time bundling on the at least one first ACK/NACK, and then perform spatial bundling and/or time bundling on the at least one second ACK/NACK.

8. The user equipment (301) according to any one of claims 1 to 7, wherein the sending module (602) is specifically configured to:
send the sorted at least two ACKs/NACKs by using a physical uplink control channel PUCCH format 3.

9. An acknowledgement information sending method, comprising:
determining a sequence to be used to send at least two acknowledgement information, ACKs/NACKs, in one uplink subframe, wherein the sequence is determined according to a communication standard followed by both the user equipment (301) and a network device (302), or by transferring signaling before the user equipment (301) and the network device (302) transmit data, the at least two ACKs/NACKs comprise at least one first ACK/NACK and at least one second ACK/NACK, the first ACK/NACK and the second ACK/NACK being distinguished, and the sequence to be used to send the at least two ACKs/NACKS is sorted such that
the at least one first ACK/NACK being first, and the at least one second ACK/NACK being second in the determined sequence, or
the at least one second ACK/NACK being first, and the at least one first ACK/NACK being second in the determined sequence, wherein
the first ACK/NACK is used to feed back a receiving status of a first signal, and the first signal is transmitted on a first frequency band; the second ACK/NACK is used to feed back a receiving status of a second signal, and the second signal is transmitted on a second frequency band; the first frequency band is a frequency band used for device-to-device, D2D, transmission and/or a frequency band used for both uplink transmission and downlink transmission; and the second frequency band is a frequency band used for downlink transmission; and
sending the sorted at least two ACKs/NACKs according to the determined sequence to the network device (302).

10. The method according to claim 9, wherein the sorting at least two ACKs/NACKs to be sent in one uplink subframe further includes:
sorting the at least one first ACK/NACK according to a sequence or reverse sequence of a sequence number of a carrier in which the first signal corresponding to the first ACK/NACK is located; and
sorting the at least one second ACK/NACK according to a sequence or reverse sequence of a sequence number of a carrier in which the second signal corresponding to the second ACK/NACK is located.

11. The method according to claim 9 or 10, wherein before the sending the sorted at least two ACKs/NACKs, the method further comprises:
determining a quantity of bits of the to-be-sent at least two ACKs/NACKs; and
determining that the determined quantity of bits is greater than a preset bit quantity threshold;
before the sorting at least two ACKs/NACKs to be sent in one uplink subframe, the method further comprises:
bundling the at least one first ACK/NACK, and bundling the at least one second ACK/NACK; and
the sorting at least two ACKs/NACKs to be sent in one uplink subframe comprises:
sorting the bundled at least one first ACK/NACK and the bundled at least one second ACK/NACK.

12. The method according to claim 9 or 10, wherein before the sending the sorted at least two ACKs/NACKs, the method further comprises:
determining a quantity of bits of the to-be-sent at least two ACKs/NACKs, and determining that the determined quantity of bits is greater than a preset bit quantity threshold; and
after the sorting at least two ACKs/NACKs to be sent in one uplink subframe, the method further comprises:
bundling at least one first ACK/NACK of the sorted at least two ACKs/NACKs, and bundling at least one second ACK/NACK of the sorted at least two ACKs/NACKs.

13. The method according to claim 11 or 12, wherein the bundling comprises:
performing spatial bundling, so that a quantity of bits of the bundled at least two ACKs/NACKs is not greater than the preset bit quantity threshold; or
performing time bundling, so that a quantity of bits of the bundled at least two ACKs/NACKs is not greater than the preset bit quantity threshold; or
first performing spatial bundling, and if a quantity of bits of the at least two ACKs/NACKs on which spatial bundling is performed is greater than the preset bit quantity threshold, then performing time bundling, so that a quantity of bits of the bundled at least two ACKs/NACKs is not greater than the preset bit quantity threshold; or
first performing time bundling, and if a quantity of bits of the at least two ACKs/NACKs on which time bundling is performed is greater than the preset bit quantity threshold, then performing spatial bundling, so that a quantity of bits of the bundled at least two ACKs/NACKs is not greater than the preset bit quantity threshold.

14. The method according to claim 13, wherein the bundling comprises performing bundling according to the following manner and according to a sequence number of a carrier in which a signal corresponding to each ACK/NACK of the at least two ACKs/NACKs to be sent on the uplink subframe is located:
first performing spatial bundling and/or time bundling on a carrier with a small sequence number, and then performing spatial bundling and/or time bundling on a carrier with a large sequence number; or
first performing spatial bundling and/or time bundling on a carrier with a large sequence number, and then performing spatial bundling and/or time bundling on a carrier with a small sequence number.

15. The method according to claim 13 or 14, wherein the bundling comprises:
first performing spatial bundling and/or time bundling on the at least one second ACK/NACK, and then performing spatial bundling and/or time bundling on the at least one first ACK/NACK; or
first performing spatial bundling and/or time bundling on the at least one first ACK/NACK, and then performing spatial bundling and/or time bundling on the at least one second ACK/NACK.

## Patentansprüche

1. Benutzergerät (301), umfassend:
ein Verarbeitungsmodul (601), das dazu konfiguriert ist, eine Sequenz zu bestimmen, die verwendet werden soll, um mindestens zwei Bestätigungsinformationen, ACKs/NACKs, in einem Uplink-Unterrahmen durch das Benutzergerät (301) zu senden, wobei die Sequenz gemäß einem Kommunikationsstandard bestimmt wird, der sowohl von dem Benutzergerät (301) als auch von einer Netzwerkvorrichtung (302) befolgt wird, oder durch Übertragung einer Signalisierung, bevor das Benutzergerät (301) und die Netzwerkvorrichtung (302) Daten übertragen, wobei die mindestens zwei ACKs/NACKs mindestens eine erste ACK/NACK und mindestens eine zweite ACK/NACK umfassen, wobei die erste ACK/NACK und die zweite ACK/NACK unterschiedlich sind, und die zum Senden der mindestens zwei ACKs/NACKs zu verwendende Sequenz so sortiert ist, dass
die mindestens eine erste ACK/NACK die erste und die mindestens eine zweite ACK/NACK die zweite in der bestimmten Sequenz ist, oder
die mindestens eine zweite ACK/NACK die erste und die mindestens eine erste ACK/NACK die zweite in der bestimmten Sequenz ist, wobei die erste ACK/NACK verwendet wird, um einen Empfangsstatus eines ersten Signals rückzumelden, und das erste Signal auf einem ersten Frequenzband übertragen wird;
die zweite ACK/NACK verwendet wird, um einen Empfangsstatus eines zweiten Signals rückzumelden, und das zweite Signal auf einem zweiten Frequenzband übertragen wird; das erste Frequenzband ein Frequenzband ist, das für die Übertragung von Gerät zu Gerät, D2D, verwendet wird, und/oder ein Frequenzband, das sowohl für die Uplink- als auch für die Downlink-Übertragung verwendet wird; und das zweite Frequenzband ein Frequenzband ist, das für die Downlink-Übertragung verwendet wird; und
ein Sendemodul (602), das dazu konfiguriert ist, die mindestens zwei ACKs/NACKs, die von dem Verarbeitungsmodul (601) gemäß der bestimmten Sequenz sortiert werden, an die Netzwerkvorrichtung (302) zu senden.

2. Benutzergerät (301) nach Anspruch 1, wobei das Verarbeitungsmodul (601) insbesondere dazu konfiguriert ist:
die mindestens eine erste ACK/NACK gemäß einer Sequenz oder umgekehrten Sequenz einer Sequenznummer eines Trägers zu sortieren, in dem sich das erste Signal, das der ersten ACK/NACK entspricht, befindet; und
die mindestens eine zweite ACK/NACK gemäß einer Sequenz oder umgekehrten Sequenz einer Sequenznummer eines Trägers zu sortieren, in dem sich das zweite Signal, das der zweiten ACK/NACK entspricht, befindet.

3. Benutzergerät (301) nach Anspruch 1 oder 2, wobei das Verarbeitungsmodul (601) ferner dazu konfiguriert ist, bevor das Sendemodul (601) die sortierten mindestens zwei ACKs/NACKs sendet,
eine Anzahl von Bits der mindestens zwei ACKs/NACKs zu bestimmen, die von dem Benutzergerät (301) zu senden sind;
zu bestimmen, dass die bestimmte Anzahl von Bits größer als ein voreingestellter Schwellenwert für die Anzahl von Bits ist; und
vor dem Sortieren der mindestens zwei ACKs/NACKs, die von dem Benutzergerät (301) in einen Uplink-Unterrahmen zu senden sind, die mindestens eine erste ACK/NACK zu bündeln und die mindestens eine zweite ACK/NACK zu bündeln, wobei
das Verarbeitungsmodul (601) insbesondere dazu konfiguriert ist, die gebündelte mindestens eine erste ACK/NACK und die gebündelte mindestens eine zweite ACK/NACK zu sortieren.

4. Benutzergerät (301) nach Anspruch 1 oder 2, wobei das Verarbeitungsmodul (601) ferner dazu konfiguriert ist, vor dem Senden der sortierten mindestens zwei ACKs/NACKs,
eine Anzahl von Bits der mindestens zwei ACKs/NACKs zu bestimmen, die von dem Benutzergerät (301) zu senden sind, und zu bestimmen, dass die bestimmte Anzahl von Bits größer als ein voreingestellter Schwellenwert für die Anzahl von Bits ist; und nach dem Sortieren der mindestens zwei ACKs/NACKs, die von dem Benutzergerät (301) in einem Uplink-Unterrahmen zu senden sind, mindestens eine erste ACK/NACK der sortierten mindestens zwei ACKs/NACKs zu bündeln und mindestens eine zweite ACK/NACK der sortierten mindestens zwei ACKs/NACKs zu bündeln.

5. Benutzergerät (301) nach Anspruch 3 oder 4, wobei das Verarbeitungsmodul (601) insbesondere dazu konfiguriert ist:
eine räumliche Bündelung durchführen, so dass eine Anzahl von Bits der gebündelten mindestens zwei ACKs/NACKs nicht größer als der voreingestellte Schwellenwert für die Anzahl von Bits ist; oder
eine zeitliche Bündelung durchführen, so dass eine Anzahl von Bits der gebündelten mindestens zwei ACKs/NACKs nicht größer als der voreingestellte Schwellenwert für die Anzahl von Bits ist; oder
zuerst eine räumliche Bündelung durchzuführen, und wenn eine Anzahl von Bits der mindestens zwei ACKs/NACKs, an denen eine räumliche Bündelung durchgeführt wird, größer als der voreingestellte Schwellenwert für die Anzahl von Bits ist, dann eine zeitliche Bündelung durchzuführen, so dass eine Anzahl von Bits der gebündelten mindestens zwei ACKs/NACKs nicht größer als der voreingestellte Schwellenwert für die Anzahl von Bits ist; oder
zuerst eine zeitliche Bündelung durchzuführen, und wenn eine Anzahl von Bits der mindestens zwei ACKs/NACKs, an denen eine zeitliche Bündelung durchgeführt wird, größer als der voreingestellte Schwellenwert für die Anzahl von Bits ist, dann eine räumliche Bündelung durchzuführen, so dass eine Anzahl von Bits der gebündelten mindestens zwei ACKs/NACKs nicht größer als der voreingestellte Schwellenwert für die Anzahl von Bits ist.

6. Benutzergerät (301) nach Anspruch 5, wobei das Verarbeitungsmodul (601) insbesondere dazu konfiguriert ist, eine Bündelung gemäß der folgenden Art und Weise und gemäß einer Sequenznummer eines Trägers durchzuführen, in dem sich ein Signal befindet, das jeder ACK/NACK der mindestens zwei ACKs/NACKs entspricht, die auf dem Uplink-Unterrahmen zu senden sind:
zuerst eine räumliche Bündelung und/oder zeitliche Bündelung auf einem Träger mit einer kleinen Sequenznummer durchzuführen und dann eine räumliche Bündelung und/oder zeitliche Bündelung auf einem Träger mit einer großen Sequenznummer durchzuführen; oder
zuerst eine räumliche Bündelung und/oder zeitliche Bündelung auf einem Träger mit einer großen Sequenznummer durchzuführen und dann eine räumliche Bündelung und/oder zeitliche Bündelung auf einem Träger mit einer kleinen Sequenznummer durchzuführen.

7. Benutzergerät (301) nach Anspruch 5 oder 6, wobei das Verarbeitungsmodul (601) insbesondere dazu konfiguriert ist:
zuerst eine räumliche Bündelung und/oder zeitliche Bündelung auf der mindestens einen zweiten ACK/NACK durchzuführen und dann eine räumliche Bündelung und/oder zeitliche Bündelung auf der mindestens einen ersten ACK/NACK durchzuführen; oder
zuerst eine räumliche Bündelung und/oder zeitliche Bündelung auf der mindestens einen ersten ACK/NACK durchzuführen und dann eine räumliche Bündelung und/oder zeitliche Bündelung auf der mindestens einen zweiten ACK/NACK durchzuführen.

8. Benutzergerät (301) nach einem der Ansprüche 1 bis 7, wobei das Sendemodul (602) insbesondere dazu konfiguriert ist:
die sortierten mindestens zwei ACKs/NACKs unter Verwendung eines physikalischen Uplink-Steuerkanals PUCCH Format 3 zu senden.

9. Verfahren zum Senden von Bestätigungsinformationen, umfassend:
Bestimmen einer Sequenz, die verwendet werden soll, um mindestens zwei Bestätigungsinformationen, ACKs/NACKs, in einem Uplink-Unterrahmen zu senden, wobei die Sequenz gemäß einem Kommunikationsstandard bestimmt wird, der sowohl von dem Benutzergerät (301) als auch von einer Netzwerkvorrichtung (302) befolgt wird, oder durch Übertragung einer Signalisierung, bevor das Benutzergerät (301) und die Netzwerkvorrichtung (302) Daten übertragen, wobei die mindestens zwei ACKs/NACKs mindestens eine erste ACK/NACK und mindestens eine zweite ACK/NACK umfassen, wobei die erste ACK/NACK und die zweite ACK/NACK unterschiedlich sind, und die zum Senden der mindestens zwei ACKs/NACKs zu verwendende Sequenz so sortiert ist, dass
die mindestens eine erste ACK/NACK die erste und die mindestens eine zweite ACK/NACK die zweite in der bestimmten Sequenz ist, oder
die mindestens eine zweite ACK/NACK die erste und die mindestens eine erste ACK/NACK die zweite in der bestimmten Sequenz ist, wobei die erste ACK/NACK verwendet wird, um einen Empfangsstatus eines ersten Signals rückzumelden, und das erste Signal auf einem ersten Frequenzband übertragen wird;
die zweite ACK/NACK verwendet wird, um einen Empfangsstatus eines zweiten Signals rückzumelden, und das zweite Signal auf einem zweiten Frequenzband übertragen wird; das erste Frequenzband ein Frequenzband ist, das für die Übertragung von Gerät zu Gerät, D2D, verwendet wird, und/oder ein Frequenzband, das sowohl für die Uplink-Übertragung als auch für die Downlink-Übertragung verwendet wird; und
das zweite Frequenzband ein Frequenzband ist, das für die Downlink-Übertragung verwendet wird; und
Senden der sortierten mindestens zwei ACKs/NACKs gemäß der bestimmten Sequenz an die Netzwerkvorrichtung (302).

10. Verfahren nach Anspruch 9, wobei das Sortieren von mindestens zwei ACKs/NACKs, die in einem Uplink-Unterrahmen zu senden sind, ferner umfasst:
Sortieren der mindestens einen ersten ACK/NACK gemäß einer Sequenz oder umgekehrten Sequenz einer Sequenznummer eines Trägers, in dem sich das erste Signal, das der ersten ACK/NACK entspricht, befindet; und
Sortieren der mindestens einen zweiten ACK/NACK gemäß einer Sequenz oder umgekehrten Sequenz einer Sequenznummer eines Trägers, in dem sich das zweite Signal, das der zweiten ACK/NACK entspricht, befindet.

11. Verfahren nach Anspruch 9 oder 10, wobei vor dem Senden der sortierten mindestens zwei ACKs/NACKs, das Verfahren ferner umfasst:
Bestimmen einer Anzahl von Bits der mindestens zwei ACKs/NACKs, die zu senden sind; und
Bestimmen, dass die bestimmte Anzahl von Bits größer als ein voreingestellter Schwellenwert für die Anzahl von Bits ist;
vor dem Sortieren von mindestens zwei ACKs/NACKs, die in einem Uplink-Unterrahmen zu senden sind, das Verfahren ferner umfasst:
Bündeln der mindestens einen ersten ACK/NACK und Bündeln der mindestens einen zweiten ACK/NACK; und
das Sortieren von mindestens zwei ACKs/NACKs, die in einem Uplink-Unterrahmen zu senden sind, umfasst:
Sortieren der gebündelten mindestens einen ersten ACK/NACK und der gebündelten mindestens einen zweiten ACK/NACK.

12. Verfahren nach Anspruch 9 oder 10, wobei vor dem Senden der sortierten mindestens zwei ACKs/NACKs, das Verfahren ferner umfasst:
Bestimmen einer Anzahl von Bits der mindestens zwei ACKs/NACKs, die zu senden sind, und Bestimmen, dass die bestimmte Anzahl von Bits größer als ein voreingestellter Schwellenwert für die Anzahl von Bits ist; und
nach dem Sortieren von mindestens zwei ACKs/NACKs, die in einem Uplink-Unterrahmen zu senden sind, das Verfahren ferner umfasst:
Bündeln von mindestens einer ersten ACK/NACK der sortierten mindestens zwei ACKs/NACKs und Bündeln von mindestens einer zweiten ACK/NACK der sortierten mindestens zwei ACKs/NACKs.

13. Verfahren nach Anspruch 11 oder 12, wobei das Bündeln umfasst:
Durchführen einer räumlichen Bündelung, so dass eine Anzahl von Bits der gebündelten mindestens zwei ACKs/NACKs nicht größer als der voreingestellte Schwellenwert für die Anzahl von Bits ist; oder
Durchführen einer zeitlichen Bündelung, so dass eine Anzahl von Bits der gebündelten mindestens zwei ACKs/NACKs nicht größer als der voreingestellte Schwellenwert für die Anzahl von Bits ist; oder
zuerst Durchführen einer räumlichen Bündelung, und wenn eine Anzahl von Bits der mindestens zwei ACKs/NACKs, an denen eine räumliche Bündelung durchgeführt wird, größer als der voreingestellte Schwellenwert für die Anzahl von Bits ist, dann Durchführen einer zeitlichen Bündelung, so dass eine Anzahl von Bits der gebündelten mindestens zwei ACKs/NACKs nicht größer als der voreingestellte Schwellenwert für die Anzahl von Bits ist; oder
zuerst Durchführen einer zeitlichen Bündelung, und wenn eine Anzahl von Bits der mindestens zwei ACKs/NACKs, an denen eine zeitliche Bündelung durchgeführt wird, größer als der voreingestellte Schwellenwert für die Anzahl von Bits ist, dann Durchführen einer räumlichen Bündelung, so dass eine Anzahl von Bits der gebündelten mindestens zwei ACKs/NACKs nicht größer als der voreingestellte Schwellenwert für die Anzahl von Bits ist.

14. Verfahren nach Anspruch 13, wobei das Bündeln das Durchführen des Bündelns gemäß der folgenden Art und Weise und gemäß einer Sequenznummer eines Trägers umfasst, in dem sich ein Signal befindet, das jeder ACK/NACK der mindestens zwei ACKs/NACKs entspricht, die auf dem Uplink-Unterrahmen zu senden sind:
zuerst eine räumliche Bündelung und/oder zeitliche Bündelung auf einem Träger mit einer kleinen Sequenznummer durchzuführen und dann eine räumliche Bündelung und/oder zeitliche Bündelung auf einem Träger mit einer großen Sequenznummer durchzuführen; oder
zuerst eine räumliche Bündelung und/oder zeitliche Bündelung auf einem Träger mit einer großen Sequenznummer durchzuführen und dann eine räumliche Bündelung und/oder zeitliche Bündelung auf einem Träger mit einer kleinen Sequenznummer durchzuführen.

15. Verfahren nach Anspruch 13 oder 14, wobei das Bündeln umfasst:
zuerst Durchführen einer räumlichen Bündelung und/oder zeitlichen Bündelung der mindestens einen zweiten ACK/NACK und dann Durchführen einer räumlichen Bündelung und/oder zeitlichen Bündelung der mindestens einen ersten ACK/NACK; oder
zuerst Durchführen einer räumlichen Bündelung und/oder zeitlichen Bündelung auf der mindestens einen ersten ACK/NACK und dann Durchführen einer räumlichen Bündelung und/oder zeitlichen Bündelung auf der mindestens einen zweiten ACK/NACK.

## Revendications

1. Équipement d'utilisateur (301), comprenant :
un module de traitement (601), configuré pour déterminer une séquence à utiliser pour envoyer au moins deux informations d'accusé de réception (ACK/NACK) dans une sous-trame en liaison montante par l'équipement d'utilisateur (301), la séquence étant déterminée selon une norme de communication suivie par l'équipement d'utilisateur (301) et un dispositif de réseau (302) ou en transférant une signalisation avant que l'équipement d'utilisateur (301) et le dispositif de réseau (302) ne transmettent des données, les au moins deux ACK/NACK comprenant au moins un premier ACK/NACK et au moins un second ACK/NACK, le premier ACK/NACK et le second ACK/NACK étant distincts, et la séquence à utiliser pour envoyer les au moins deux ACK/NACK étant triée de sorte que :
l'au moins un premier ACK/NACK est le premier et l'au moins un second ACK/NACK est le second dans la séquence déterminée, ou
l'au moins un second ACK/NACK est le premier et l'au moins un premier ACK/NACK est le second dans la séquence déterminée,
le premier ACK/NACK étant utilisé pour retourner un statut de réception d'un premier signal et le premier signal étant transmis sur une première bande de fréquences ; le second ACK/NACK étant utilisé pour retourner un statut de réception d'un second signal et le second signal étant transmis sur une seconde bande de fréquences ; la première bande de fréquences étant une bande de fréquences utilisée pour une transmission entre dispositifs (D2D) et/ou une bande de fréquences utilisée tant pour une transmission en liaison montante que pour une transmission en liaison descendante ; et la seconde bande de fréquences étant une bande de fréquences utilisée pour une transmission en liaison descendante ; et
un module d'envoi (602), configuré pour envoyer au dispositif de réseau (302) les au moins deux ACK/NACK triés par le module de traitement (601) selon la séquence déterminée.

2. Équipement d'utilisateur (301) selon la revendication 1, dans lequel le module de traitement (601) est spécifiquement configuré pour :
trier l'au moins un premier ACK/NACK selon une séquence ou une séquence inverse d'un numéro de séquence d'une porteuse où se trouve le premier signal correspondant au premier ACK/NACK ; et
trier l'au moins un second ACK/NACK selon une séquence ou une séquence inverse d'un numéro de séquence d'une porteuse où se trouve le second signal correspondant au second ACK/NACK.

3. Équipement d'utilisateur (301) selon la revendication 1 ou 2, dans lequel le module de traitement (601) est en outre configuré pour : avant que le module d'envoi (601) n'envoie les au moins deux ACK/NACK triés,
déterminer un nombre de bits des au moins deux ACK/NACK à envoyer par l'équipement d'utilisateur (301) ;
déterminer que le nombre de bits déterminé est supérieur à un seuil de nombre de bits prédéfini ; et
avant le tri des au moins deux ACK/NACK à envoyer dans une sous-trame en liaison montante par l'équipement d'utilisateur (301), regrouper l'au moins un premier ACK/NACK et regrouper l'au moins un second ACK/NACK,
le module de traitement (601) étant spécifiquement configuré pour trier l'au moins premier ACK/NACK regroupé et l'au moins un second ACK/NACK regroupé.

4. Équipement d'utilisateur (301) selon la revendication 1 ou 2, dans lequel le module de traitement (601) est en outre configuré pour : avant l'envoi des au moins deux ACK/NACK triés,
déterminer un nombre de bits des au moins deux ACK/NACK à envoyer par l'équipement d'utilisateur (301) et déterminer que le nombre de bits déterminé est supérieur à un seuil de nombre de bits prédéfini ; et
après le tri des au moins deux ACK/NACK à envoyer dans une sous-trame en liaison montante par l'équipement d'utilisateur (301), regrouper au moins un premier ACK/NACK des au moins deux ACK/NACK triés et regrouper au moins un second ACK/NACK des au moins deux ACK/NACK triés.

5. Équipement d'utilisateur (301) selon la revendication 3 ou 4, dans lequel le module de traitement (601) est spécifiquement configuré pour :
réaliser un regroupement spatial, de sorte qu'un nombre de bits des au moins deux ACK/NACK regroupés ne soit pas supérieur au seuil de nombre de bits prédéfini ; ou
réaliser un regroupement temporel, de sorte qu'un nombre de bits des au moins deux ACK/NACK regroupés ne soit pas supérieur au seuil de nombre de bits prédéfini ; ou
réaliser d'abord un regroupement spatial, et, si un nombre de bits des au moins deux ACK/NACK sur lesquels le regroupement spatial est réalisé est supérieur au seuil de nombre de bits prédéfini, réaliser ensuite un regroupement temporel, de sorte qu'un nombre de bits des au moins deux ACK/NACK regroupés ne soit pas supérieur au seuil de nombre de bits prédéfini ; ou
réaliser d'abord un regroupement temporel, et, si un nombre de bits des au moins deux ACK/NACK sur lesquels le regroupement temporel est réalisé est supérieur au seuil de nombre de bits prédéfini, réaliser ensuite un regroupement spatial, de sorte qu'un nombre de bits des au moins deux ACK/NACK regroupés ne soit pas supérieur au seuil de nombre de bits prédéfini.

6. Équipement d'utilisateur (301) selon la revendication 5, dans lequel le module de traitement (601) est spécifiquement configuré pour réaliser un regroupement de la manière suivante et selon un numéro de séquence d'une porteuse où se trouve un signal correspondant à chaque ACK/NACK des au moins deux ACK/NACK à envoyer sur la sous-trame en liaison montante :
réaliser d'abord un regroupement spatial et/ou un regroupement temporel sur une porteuse avec un petit numéro de séquence, puis réaliser un regroupement spatial et/ou un regroupement temporel sur une porteuse avec un grand numéro de séquence ; ou
réaliser d'abord un regroupement spatial et/ou un regroupement temporel sur une porteuse avec un grand numéro de séquence, puis réaliser un regroupement spatial et/ou un regroupement temporel sur une porteuse avec un petit numéro de séquence.

7. Équipement d'utilisateur (301) selon la revendication 5 ou 6, dans lequel le module de traitement (601) est spécifiquement configuré pour :
réaliser d'abord un regroupement spatial et/ou un regroupement temporel sur l'au moins un second ACK/NACK, puis réaliser un regroupement spatial et/ou un regroupement temporel sur l'au moins un premier ACK/NACK ; ou
réaliser d'abord un regroupement spatial et/ou un regroupement temporel sur l'au moins un premier ACK/NACK, puis réaliser un regroupement spatial et/ou un regroupement temporel sur l'au moins un second ACK/NACK.

8. Équipement d'utilisateur (301) selon l'une quelconque des revendications 1 à 7, dans lequel le module d'envoi (602) est spécifiquement configuré pour :
envoyer les au moins deux ACK/NACK triés au moyen d'un canal de contrôle physique en liaison montante (PUCCH) de format 3.

9. Procédé d'envoi d'informations d'accusé de réception, comprenant les étapes consistant à :
déterminer une séquence à utiliser pour envoyer au moins deux informations d'accusé de réception (ACK/NACK) dans une sous-trame en liaison montante, la séquence étant déterminée selon une norme de communication suivie par l'équipement d'utilisateur (301) et un dispositif de réseau (302) ou en transférant une signalisation avant que l'équipement d'utilisateur (301) et le dispositif de réseau (302) ne transmettent des données, les au moins deux ACK/NACK comprenant au moins un premier ACK/NACK et au moins un second ACK/NACK, le premier ACK/NACK et le second ACK/NACK étant distincts, et la séquence à utiliser pour envoyer les au moins deux ACK/NACK étant triée de sorte que :
l'au moins un premier ACK/NACK est le premier et l'au moins un second ACK/NACK est le second dans la séquence déterminée, ou
l'au moins un second ACK/NACK est le premier et l'au moins un premier ACK/NACK est le second dans la séquence déterminée,
le premier ACK/NACK étant utilisé pour retourner un statut de réception d'un premier signal et le premier signal étant transmis sur une première bande de fréquences ; le second ACK/NACK étant utilisé pour retourner un statut de réception d'un second signal et le second signal étant transmis sur une seconde bande de fréquences ; la première bande de fréquences étant une bande de fréquences utilisée pour une transmission entre dispositifs (D2D) et/ou une bande de fréquences utilisée tant pour une transmission en liaison montante que pour une transmission en liaison descendante ; et la seconde bande de fréquences étant une bande de fréquences utilisée pour une transmission en liaison descendante ; et
envoyer au dispositif de réseau (302) les au moins deux ACK/NACK triés selon la séquence déterminée.

10. Procédé selon la revendication 9, dans lequel le tri d'au moins deux ACK/NACK à envoyer dans une sous-trame en liaison montante comprend en outre les étapes consistant à :
trier l'au moins un premier ACK/NACK selon une séquence ou une séquence inverse d'un numéro de séquence d'une porteuse où se trouve le premier signal correspondant au premier ACK/NACK ; et
trier l'au moins un second ACK/NACK selon une séquence ou une séquence inverse d'un numéro de séquence d'une porteuse où se trouve le second signal correspondant au second ACK/NACK.

11. Procédé selon la revendication 9 ou 10, le procédé comprenant en outre, avant l'envoi des au moins deux ACK/NACK triés, les étapes consistant à :
déterminer un nombre de bits des au moins eux ACK/NACK à envoyer ; et
déterminer que le nombre de bits déterminé est supérieur à un seuil de nombre de bits prédéfini ;
avant le tri d'au moins deux ACK/NACK à envoyer dans une sous-trame en liaison montante, le procédé comprenant en outre l'étape consistant à :
regrouper l'au moins un premier ACK/NACK et regrouper l'au moins un second ACK/NACK ; et
le tri d'au moins deux ACK/NACK à envoyer dans une sous-trame en liaison montante comprenant l'étape consistant à :
trier l'au moins premier ACK/NACK regroupé et l'au moins un second ACK/NACK regroupé.

12. Procédé selon la revendication 9 ou 10, le procédé comprenant en outre, avant l'envoi des au moins deux ACK/NACK triés, l'étape consistant à :
déterminer un nombre de bits des au moins eux ACK/NACK à envoyer et déterminer que le nombre de bits déterminé est supérieur à un seuil de nombre de bits prédéfini ; et
après le tri d'au moins deux ACK/NACK à envoyer dans une sous-trame en liaison montante, le procédé comprenant en outre les étapes consistant à :
regrouper au moins un premier ACK/NACK des au moins deux ACK/NACK triés et regrouper au moins un second ACK/NACK des au moins deux ACK/NACK triés.

13. Procédé selon la revendication 11 ou 12, dans lequel le regroupement comprend l'étape consistant à :
réaliser un regroupement spatial, de sorte qu'un nombre de bits des au moins deux ACK/NACK regroupés ne soit pas supérieur au seuil de nombre de bits prédéfini ; ou
réaliser un regroupement temporel, de sorte qu'un nombre de bits des au moins deux ACK/NACK regroupés ne soit pas supérieur au seuil de nombre de bits prédéfini ; ou
réaliser d'abord un regroupement spatial, et, si un nombre de bits des au moins deux ACK/NACK sur lesquels le regroupement spatial est réalisé est supérieur au seuil de nombre de bits prédéfini, réaliser ensuite un regroupement temporel, de sorte qu'un nombre de bits des au moins deux ACK/NACK regroupés ne soit pas supérieur au seuil de nombre de bits prédéfini ; ou
réaliser d'abord un regroupement temporel, et, si un nombre de bits des au moins deux ACK/NACK sur lesquels le regroupement temporel est réalisé est supérieur au seuil de nombre de bits prédéfini, réaliser ensuite un regroupement spatial, de sorte qu'un nombre de bits des au moins deux ACK/NACK regroupés ne soit pas supérieur au seuil de nombre de bits prédéfini.

14. Procédé selon la revendication 13, dans lequel le regroupement comprend la réalisation d'un regroupement de la manière suivante et selon un numéro de séquence d'une porteuse où se trouve un signal correspondant à chaque ACK/NACK des au moins deux ACK/NACK à envoyer sur la sous-trame en liaison montante :
réaliser d'abord un regroupement spatial et/ou un regroupement temporel sur une porteuse avec un petit numéro de séquence, puis réaliser un regroupement spatial et/ou un regroupement temporel sur une porteuse avec un grand numéro de séquence ; ou
réaliser d'abord un regroupement spatial et/ou un regroupement temporel sur une porteuse avec un grand numéro de séquence, puis réaliser un regroupement spatial et/ou un regroupement temporel sur une porteuse avec un petit numéro de séquence.

15. Procédé selon la revendication 13 ou 14, dans lequel le regroupement comprend l'étape consistant à :
réaliser d'abord un regroupement spatial et/ou un regroupement temporel sur l'au moins un second ACK/NACK, puis réaliser un regroupement spatial et/ou un regroupement temporel sur l'au moins un premier ACK/NACK ; ou
réaliser d'abord un regroupement spatial et/ou un regroupement temporel sur l'au moins un premier ACK/NACK, puis réaliser un regroupement spatial et/ou un regroupement temporel sur l'au moins un second ACK/NACK.
